# EUROPÄISCHE PATENTSCHRIFT

(11) **EP 4 337 911 B1**
(45) Veröffentlichungstag und Bekanntmachung des Hinweises auf die Patenterteilung: **04.03.2026**
(21) Anmeldenummer: 22725426.5
(22) Anmeldetag: 25.04.2022
(51) Int. Cl.: G01B 11/00, G01B 11/24, B22F 12/90, B29C 64/386, B33Y 50/00

(54) **MESSVORRICHTUNG, FERTIGUNGSVORRICHTUNG MIT EINER SOLCHEN MESSVORRICHTUNG UND VERFAHREN ZUM BETREIBEN EINER FERTIGUNGSVORRICHTUNG ZUM GENERATIVEN FERTIGEN EINES BAUTEILS AUS EINEM PULVERMATERIAL**
MEASURING DEVICE, MANUFACTURING DEVICE HAVING A MEASURING DEVICE OF THIS TYPE, AND METHOD FOR OPERATING A MANUFACTURING DEVICE FOR THE ADDITIVE MANUFACTURING OF A COMPONENT FROM A POWDER MATERIAL
DISPOSITIF DE MESURE, DISPOSITIF DE FABRICATION DOTÉ D'UN DISPOSITIF DE MESURE DE CE TYPE ET PROCÉDÉ DE FONCTIONNEMENT D'UN DISPOSITIF DE FABRICATION POUR LA FABRICATION ADDITIVE D'UN COMPOSANT À PARTIR D'UN MATÉRIAU EN POUDRE

(30) Priorität: 10.05.2021 DE 102021204729
(43) Veröffentlichungstag der Anmeldung: 20.03.2024
(73) Patentinhaber: TRUMPF Laser- und Systemtechnik SE, 71254 Ditzingen (DE)
(72) Erfinder: BLICKLE, Valentin, 70190 Stuttgart (DE); PETERS, Julia, 70372 Stuttgart (DE); GRONLE, Marc, 70567 Stuttgart (DE)
(74) Vertreter: Trumpf Patentabteilung
(86) Internationale Anmeldenummer: PCT/EP2022/060860
(87) Internationale Veröffentlichungsnummer: WO 2022/238099

(56) Entgegenhaltungen:
- CN-A- 109 989 585
- DE-A1- 102018 219 301
- US-A1- 2016 303 806
- US-A1- 2021 023 622

## Beschreibung

Die Erfindung betrifft eine Messvorrichtung und eine Fertigungsvorrichtung mit einer solchen Messvorrichtung zum generativen Fertigen eines Bauteils aus einem Pulvermaterial.

Bei der Fertigung von Bauteilen mittels generativer Fertigungsverfahren ergibt sich häufig das Problem, dass ein zu fertigendes Bauteil sehr exakt, das heißt mit hoher räumlicher Genauigkeit, in einem Arbeitsbereich einer zur Herstellung des Bauteils verwendeten generativen Fertigungsvorrichtung angeordnet werden muss. Dies ist insbesondere der Fall bei der Fertigung sogenannter hybrider Bauteile, bei denen ein generativ gefertigter Bereich auf einen konventionell hergestellten Vorformling aufgebaut wird. Dabei entscheidet oftmals die Genauigkeit der Ausrichtung des neu herzustellenden Bereichs relativ zu dem Vorformling darüber, ob das hybride Fertigungsverfahren überhaupt eine für die spätere Anwendung des Bauteils nötige Genauigkeit bereitstellen kann. Beispielsweise muss ein hybrid aufgebauter Fräskopf mit innenliegenden Kühlkanälen mit einer Abweichung von weniger als 50 µm positioniert werden, um zu vermeiden, dass das entstehende - in der späteren Anwendung rotierende - Bauteil eine zu große Unwucht aufweist. Für eine korrekte Positionierung des zu fertigenden Bauteils innerhalb des Arbeitsbereichs ist eine Optimierung auf verschiedenen Längenskalen nötig. Es ist dabei kaum oder nur mit sehr hohem Aufwand möglich, die zuvor beschriebenen Optimierungsaufgaben auf verschiedenen Längenskalen mit hoher Genauigkeit und Effizienz zu lösen.

US 2021/023622 A1 offenbart ein Verfahren zum Kalibrieren einer Bearbeitungsmaschine zur Herstellung von dreidimensionalen Bauteilen durch Bestrahlen von Pulverschichten, wobei die Bearbeitungsmaschine eine Scannereinrichtung zur Positionierung eines Laserstrahls in einem Bearbeitungsfeld aufweist, in dem eine höhenverstellbare Bauplattform zum Aufbringen der Pulverschichten positioniert ist, umfassend: Überfahren von mindestens zwei, bevorzugt von mindestens drei Markierungen, insbesondere in Form von Retroreflektoren, die an der Bauplattform und/oder an einer an der Bauplattform fixierten Preform angebracht sind, mittels des Laserstrahls, Detektieren von Laserstrahlung, die beim Überfahren der mindestens zwei Markierungen in die Scannereinrichtung zurück reflektiert wird, Ermitteln von Ist-Positionen der Markierungen anhand der detektierten Laserstrahlung, Ermitteln von Abweichungen der Ist-Positionen der Markierungen von Soll-Positionen der Markierungen, sowie Kalibrieren der Bearbeitungsmaschine durch Korrigieren der Positionierung des Laserstrahls in dem Bearbeitungsfeld und/oder der Position der Bauplattform in der Bearbeitungsmaschine anhand der ermittelten Abweichungen.

CN 109 989 585 A offenbart ein Echtzeit-Rückkopplungssteuerungsverfahren für die Druckpräzision eines 3D-Druckers. Das Verfahren besteht aus zwei Teilen: Im ersten Teil wird der Positionierungsfehler einer Druckmaschine durch ein Rückkopplungssteuerungssystem der Druckmaschine reduziert; und im zweiten Teil wird der Formungsfehler eines konkreten Objekts durch ein Rückkopplungseinstellsystem zwischen dem Drucker und einem gedruckten Objekt reduziert, wobei der zweite Teil ein zweistufiges Positionierungsverfahren ist, wobei die erste Stufe ein horizontales Rückkopplungseinstellsystem für die relative Position ist und die zweite Stufe ein vertikales Rückkopplungseinstellsystem für die relative Position ist.

DE 10 2018 219 301 A1 offenbart ein Verfahren zum Erfassen eines Arbeitsbereichs einer generativen Fertigungsvorrichtung, mit folgenden Schritten:- Verlagern eines optischen Arbeitsstrahls der generativen Fertigungsvorrichtung in dem Arbeitsbereich; ortsabhängiges Erfassen von Signalwerten von entlang einer optischen Achse des optischen Arbeitsstrahls remittiertem Licht des optischen Arbeitsstrahls, wobei jedem Ort der Verlagerung des optischen Arbeitsstrahls in dem Arbeitsbereich ein Signalwert zugeordnet wird, und Erhalten einer Abbildung des Arbeitsbereichs aus den ortsabhängig erfassten Signalwerten.

US 2016/303806 A1 offenbart ein Verfahren und eine Vorrichtung zur Kalibrierung mindestens eines Abtastsystems bei der Herstellung eines Objekts durch additive Fertigung, wobei die Koordinaten einer oder mehrerer Referenzpositionen im relativen Koordinatensystem jedes Abtastsystems gemessen werden, woraufhin die Kalibrierung jedes der Abtastsysteme ausgehend von den gemessenen Koordinaten der Referenzpositionen angepasst wird.

Der Erfindung liegt die Aufgabe zugrunde, eine Messvorrichtung, eine Fertigungsvorrichtung mit einer solchen Messvorrichtung und ein Verfahren zum Betreiben einer Fertigungsvorrichtung zum generativen Fertigen eines Bauteils aus einem Pulvermaterial zu schaffen, wobei die genannten Nachteile zumindest reduziert sind, vorzugsweise nicht auftreten.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Aufgabe wird insbesondere gelöst, indem eine Messvorrichtung zum Ausrichten eines Bauplan-Koordinatensystems auf ein Bauebenen-Koordinatensystem eines in einer Bauebene angeordneten Arbeitsbereichs einer generativen Fertigungsvorrichtung geschaffen wird, wobei die Messvorrichtung eine erste Sensoreinrichtung aufweist, die eingerichtet ist, um einen ersten Erfassungsbereich des Arbeitsbereichs mit einer ersten Messgenauigkeit zu erfassen. Die Messvorrichtung weist außerdem ein Auswahlmodul auf, das eingerichtet ist, um wenigstens einen Interessenbereich innerhalb des ersten Erfassungsbereichs auszuwählen. Weiterhin weist die Messvorrichtung eine zweite Sensoreinrichtung auf, die eingerichtet ist, um den wenigstens einen ausgewählten Interessenbereich mit einer zweiten Messgenauigkeit zu erfassen, wobei die zweite Messgenauigkeit höher ist als die erste Messgenauigkeit. Die Messvorrichtung weist ein Ausrichtmodul auf, das eingerichtet ist, um wenigstens eine Ausrichtung des Bauplan-Koordinatensystems relativ zu dem Bauebenen-Koordinatensystem, ausgewählt aus einer Winkelausrichtung und einer Translationsausrichtung, anhand des erfassten Interessenbereichs zu bestimmen. Die Messvorrichtung erlaubt vorteilhaft eine sehr genaue Ausrichtung des Bauplan-Koordinatensystems relativ zu dem Bauebenen-Koordinatensystem, wodurch es insbesondere möglich wird, mit hoher Genauigkeit generativ zu fertigende Bereiche von Bauteilen auf konventionell hergestellte Vorformlinge aufzubauen und so hybride Bauteile mit hoher Qualität zu fertigen. Dabei ermöglicht vorteilhaft insbesondere die erste Sensoreinrichtung eine Erfassung eines vergleichsweise großen Erfassungsbereichs, bevorzugt des gesamten Arbeitsbereichs, auf einer ersten, größeren Längenskala, wobei mittels des Auswahlmoduls innerhalb dieses Erfassungsbereichs der zumindest eine Interessenbereich ausgewählt werden kann. Die zweite Sensoreinrichtung ermöglicht dann die - bevorzugt auf einer kleineren Längenskala erfolgende, lokale - Erfassung des Interessenbereichs mit höherer Messgenauigkeit. Somit kann insbesondere zunächst ein Gesamtüberblick erhalten werden, wobei dann insbesondere relevante Bereiche mit höherer Genauigkeit erfasst werden können. Mit dem Ausrichtmodul ist es schließlich vorteilhaft möglich, das Bauplan-Koordinatensystem relativ zu dem Bauebenen-Koordinatensystem insbesondere anhand des mit höherer Messgenauigkeit erfassten Interessenbereichs auszurichten, sodass insgesamt - mit gleichwohl vorteilhaft beschränktem Aufwand - eine hohe Genauigkeit für die Ausrichtung der Koordinatensysteme relativ zueinander erhalten wird. Insbesondere ermöglicht die hier vorgeschlagene Messvorrichtung eine Sensorfusion der ersten Sensoreinrichtung mit der zweiten Sensoreinrichtung, insbesondere bevorzugt eine multiskalige Sensorfusion, insbesondere auf verschiedenen Längenskalen.

Unter einem Bauplan-Koordinatensystem wird im Kontext der vorliegenden technischen Lehre insbesondere ein Koordinatensystem des zu fertigenden Bauteils verstanden. Dabei ist insbesondere das zu fertigende Bauteil zunächst mittels eines Fertigungsdatensatzes in dem Bauplan-Koordinatensystem definiert, wobei dann, wenn der Fertigungsdatensatz in der generativen Fertigungsvorrichtung zur Anwendung kommt, das Bauplan-Koordinatensystem mit einem Maschinen-Koordinatensystem der generativen Fertigungsvorrichtung übereinstimmt. Das Maschinen-Koordinatensystem umfasst diejenigen Koordinaten, mit denen die Fertigungsvorrichtung - insbesondere eine Scannereinrichtung für die Verlagerung eines optischen Arbeitsstrahls - angesteuert wird, um das zu fertigende Bauteil zu fertigen.

Unter einem Bauebenen-Koordinatensystem wird demgegenüber im Kontext der vorliegenden technischen Lehre insbesondere ein Koordinatensystem verstanden, das in der Bauebene der Fertigungsvorrichtung aufgespannt und relativ zu dem Arbeitsbereich fixiert ist. Somit ist insbesondere auch die Lage von wenigstens einem in dem Arbeitsbereich angeordneten Vorformling in dem Bauebenen-Koordinatensystem fixiert; insbesondere ist es möglich, dass der wenigstens eine Vorformling das Bauebenen-Koordinatensystem definiert, beispielsweise den Ursprung des Bauebenen-Koordinatensystems festlegt. Alternativ oder zusätzlich ist bevorzugt vorgesehen, dass das Bauebenen-Koordinatensystem relativ zu einer insbesondere auswechselbar an oder in der Fertigungsvorrichtung gehaltenen Substratplatte fixiert oder durch die Substratplatte definiert ist.

Das Bauplan-Koordinatensystem und das Bauebenen-Koordinatensystem können selbst bei vorhergehender Kalibration insbesondere aufgrund von Dejustage oder von thermischen Effekten in der generativen Fertigungsvorrichtung auseinanderfallen; insbesondere können sie bei Erwärmung oder Abkühlung der Fertigungsvorrichtung relativ zueinander driften. Insbesondere ist es möglich, dass sich eine Substratplatte, auf der ein Bauteil generativ gefertigt wird, thermisch ausdehnt, insbesondere wenn sie vorgeheizt wird, beispielsweise auf 200 °C oder 500 °C. Eine Ausrichtung der Koordinatensysteme relativ zueinander vor dem Beginn der Fertigung erhöht somit jedenfalls deren Qualität. Weiterhin ist es möglich, dass nicht mit hinreichend hoher Genauigkeit bekannt ist, wo der wenigstens eine Vorformling in der Bauebene angeordnet und wie er ausgerichtet ist, wobei dies mithilfe der hier vorgeschlagenen Messvorrichtung ermittelt und bei der Ausrichtung der Koordinatensysteme berücksichtigt oder für die Ausrichtung verwendet werden kann.

Unter einer Messgenauigkeit einer Sensoreinrichtung wird im Kontext der vorliegenden technischen Lehre insbesondere eine Kombination aus einer insbesondere durch die Auflösung der Sensoreinrichtung bestimmten Präzision und einer insbesondere durch einen sogenannten Registrierungsfehler beeinflussten Richtigkeit der Erfassung durch die Sensoreinrichtung verstanden. Dabei beschreibt die Präzision eine Streuung der Messwerte um einen Mittelwert, wobei die Präzision hoch ist, wenn die Streuung gering ist. Die Richtigkeit beschreibt eine Abweichung des Mittelwerts der Messwerte von einem angenommenen wahren Wert, insbesondere von einem Ort im Maschinen-Koordinatensystem. Ein Registrierungsfehler der Sensoreinrichtung ist insbesondere eine Abweichung eines Sensor-Koordinatensystems der Sensoreinrichtung von dem Maschinen-Koordinatensystem. Die Richtigkeit hängt somit unmittelbar von dem Registrierungsfehler ab, insbesondere ist die Richtigkeit hoch, wenn kein Registrierungsfehler vorliegt und das Sensor-Koordinatensystem mit dem Maschinen-Koordinatensystem übereinstimmt. Die Messgenauigkeit ist hoch, wenn sowohl die Präzision als auch die Richtigkeit hoch sind. Die Messgenauigkeit ist gering, wenn entweder die Präzision oder die Richtigkeit gering ist, oder wenn die Präzision und die Richtigkeit gering sind. Die zweite Messgenauigkeit kann höher sein als die erste Messgenauigkeit, indem die Präzision der zweiten Sensoreinrichtung bei gleicher Richtigkeit höher ist als die Präzision der ersten Sensoreinrichtung, oder indem die Richtigkeit der zweiten Sensoreinrichtung bei gleicher Präzision höher ist als die Richtigkeit der ersten Sensoreinrichtung, oder indem sowohl die Präzision als auch die Richtigkeit der zweiten Sensoreinrichtung höher sind als die Präzision und die Richtigkeit der ersten Sensoreinrichtung.

In bevorzugter Ausgestaltung ist die zweite Messgenauigkeit um einen Faktor von mindestens 2, vorzugsweise von mindestens 3, höher als die erste Messgenauigkeit. Insbesondere ist bevorzugt eine zweite geometrische Auflösung der zweiten Sensoreinrichtung um einen Faktor von mindestens 2 bis vorzugsweise höchstens 10, vorzugsweise von mindestens 3 bis bevorzugt höchstens 5, höher als eine erste geometrische Auflösung der ersten Sensoreinrichtung.

In bevorzugter Ausgestaltung weist erste Sensoreinrichtung eine geometrische Auflösung von mindestens 30 µm bis höchstens 500 µm, vorzugsweise von mindestens 100 µm bis höchstens 400 µm, vorzugsweise bis höchstens 300 µm, vorzugsweise bis höchstens 200 µm auf. Alternativ oder zusätzlich weist die zweite Sensoreinrichtung eine geometrische Auflösung von mindestens 10 µm bis höchstens 50 µm, vorzugsweise von mindestens 20 µm bis höchstens 40 µm, vorzugsweise bis höchstens 30 µm, auf.

In bevorzugter Ausgestaltung ist die erste Sensoreinrichtung eingerichtet, um als den ersten Erfassungsbereich den gesamten Arbeitsbereich der Fertigungsvorrichtung zu erfassen. Alternativ ist es in bevorzugter Ausgestaltung möglich, dass die erste Sensorvorrichtung eingerichtet ist, um den ersten Erfassungsbereich - als Bereich, der kleiner ist als der Arbeitsbereich - innerhalb des Arbeitsbereichs zu erfassen.

Unter einem Interessenbereich wird im Kontext der vorliegenden technischen Lehre insbesondere eine sogenannte Region of Interest (ROI) verstanden.

In bevorzugter Ausgestaltung ist vorgesehen, dass der höchstens eine Interessenbereich mit dem Erfassungsbereich identisch ist. Alternativ ist bevorzugt vorgesehen, dass der wenigstens eine Interessenbereich kleiner ist als der erste Erfassungsbereich. In bevorzugter Ausgestaltung ist das Auswahlmodul eingerichtet, um eine Mehrzahl von Interessenbereichen innerhalb des ersten Erfassungsbereichs auszuwählen. Die Interessenbereiche können voneinander beabstandet sein oder zumindest bereichsweise aneinander angrenzen. Es ist auch möglich, dass die Interessenbereichen zumindest teilweise miteinander überlappen. Insbesondere ist der Interessenbereich bevorzugt ein zweiter Erfassungsbereich innerhalb des ersten Erfassungsbereichs.

Unter einer Winkelausrichtung wird im Kontext der vorliegenden technischen Lehre insbesondere wenigstens ein Winkel verstanden, um den das Bauplan-Koordinatensystem relativ zu dem Bauebenen-Koordinatensystem verdreht ist.

Unter einer Translationsausrichtung wird im Kontext der vorliegenden technischen Lehre insbesondere ein linearer Abstand verstanden, um den das Bauplan-Koordinatensystem relativ zu dem Bauebenen-Koordinatensystem - oder umgekehrt - verschoben ist. Insbesondere bezieht sich die Verschiebung bevorzugt auf die Ursprünge der Koordinatensysteme.

Darunter, dass die Ausrichtung der Koordinatensysteme relativ zueinander bestimmt wird, wird bevorzugt verstanden, dass die Koordinatensysteme aufeinander ausgerichtet werden, das heißt insbesondere dass die ermittelte Verschiebung und/oder Verdrehung korrigiert wird. Alternativ wird bevorzugt ein Versatz, das heißt die Verschiebung und/oder Verdrehung, zwischen den Koordinatensystemen ermittelt, wobei dann eine weitere Bearbeitung, insbesondere Fertigung des zu fertigenden Bauteils, auf der Grundlage des ermittelten Versatzes erfolgt; dies bedeutet insbesondere, dass der ermittelte Versatz bei der weiteren Bearbeitung berücksichtigt, insbesondere herausgerechnet wird.

Bevorzugt weist die Messvorrichtung eine Mehrzahl zweiter Sensoreinrichtungen auf, insbesondere wenn die Fertigungsvorrichtung zur generativen Fertigung des zu fertigenden Bauteils eine Mehrzahl von Arbeitsstrahlen aufweist. Insbesondere ist bevorzugt jedem Arbeitsstrahl eine zweite Sensoreinrichtung zugeordnet, oder jeder Arbeitsstrahl ist Teil einer zweiten Sensoreinrichtung.

Ein Modul kann bevorzugt hardwaretechnisch, aber auch softwaretechnisch in der Messvorrichtung implementiert sein. Insbesondere kann die Funktionalität eines Moduls bevorzugt hardwaretechnisch und/oder softwaretechnisch in die Messvorrichtung implementiert sein. Dabei muss es sich bei dem Modul nicht zwingend um eine separate, physikalisch oder gedanklich abtrennbare Einrichtung oder Struktur handeln. Ein Modul kann insbesondere eine Mehrzahl von Sub-Modulen aufweisen. Insbesondere ist ein Modul bevorzugt eine Softwareeinheit.

Unter einem generativen Fertigen ist im Kontext der vorliegenden technischen Lehre insbesondere ein additives Fertigen eines Bauteils zu verstehen. Insbesondere wird darunter ein schichtweises Aufbauen eines Bauteils aus Pulvermaterial verstanden, insbesondere ein Fertigungsverfahren, das ausgewählt ist aus einer Gruppe, bestehend aus einem selektiven Lasersintern, einem selektiven Laserschmelzen, einem Laser-Metall-Fusionieren (Laser Metal Fusion - LMF), einem direkten Metall-Laser-Schmelzen (Direct Metal Laser Melting - DMLM), einem Laser Net Shaping Manufacturing (LNSM), und einem Laser Engineered Net Shaping (LENS). Die generative Fertigungsvorrichtung ist demnach insbesondere eingerichtet zur Durchführung von wenigstens einem der zuvor genannten generativen Fertigungsverfahren.

Gemäß einer Weiterbildung der Erfindung ist vorgesehen, dass das Ausrichtmodul eingerichtet ist, um die Winkelausrichtung des Bauplan-Koordinatensystems relativ zu dem Bauebenen-Koordinatensystem anhand wenigstens eines erfassten Bereichs zu bestimmen, der ausgewählt ist aus einer Gruppe, bestehend aus dem erfassten ersten Erfassungsbereich und dem erfassten Interessenbereich. Zusätzlich ist das Ausrichtmodul eingerichtet, um die Translationsausrichtung des Bauplan-Koordinatensystems relativ zu dem Bauebenen-Koordinatensystem anhand des erfassten Interessenbereichs zu bestimmen. In bevorzugter Ausgestaltung wird somit zumindest die Translationsausrichtung des Bauplan-Koordinatensystems relativ zu dem Bauebenen-Koordinatensystem anhand des erfassten Interessenbereichs bestimmt. Vorteilhaft ist dabei die Translationsausrichtung mit besonders hoher Genauigkeit anhand des erfassten Interessenbereichs bestimmbar, da die zweite Messgenauigkeit höher ist als die erste Messgenauigkeit, wobei gerade für die Bestimmung der Translationsausrichtung eine hohe Messgenauigkeit vorteilhaft ist. Die Winkelausrichtung kann demgegenüber wahlweise ebenfalls anhand des erfassten Interessenbereichs oder anhand des ersten Erfassungsbereichs bestimmt werden. Zwar ist auch zur Bestimmung der Winkelausrichtung eine hohe Messgenauigkeit vorteilhaft, es ist aber möglich, dass für die geforderte Genauigkeit bei der Bestimmung der Winkelausrichtung die erste, geringere Messgenauigkeit genügt. Insbesondere da die Winkelausrichtung auf einer größeren Längenskala hochgenau bestimmt werden kann, beispielsweise anhand des Verlaufs vollständiger, den Erfassungsbereich durchziehender Kanten, kann die Winkelausrichtung auch anhand des ersten Erfassungsbereichs bestimmt werden.

Bei einer bevorzugten Ausgestaltung, bei der sowohl die Winkelausrichtung als auch die Translationsausrichtung anhand des erfassten Interessenbereichs bestimmt werden, dient der erste Erfassungsbereich bevorzugt im Wesentlichen oder sogar ausschließlich dazu, den wenigstens einen Interessenbereich auszuwählen, insbesondere zu identifizieren und auszuwählen.

Gemäß einer Weiterbildung der Erfindung ist vorgesehen, dass das Ausrichtmodul eingerichtet ist, um wenigstens ein Lagebestimmungsmerkmal von wenigstens einem in dem Arbeitsbereich angeordneten Vorformling zu erkennen. Das Ausrichtmodul ist außerdem eingerichtet, um eine geometrische Lage des wenigstens einen Lagebestimmungsmerkmals relativ zu wenigstens einem Koordinatensystem festzulegen, wobei das wenigstens eine Koordinatensystem ausgewählt ist aus einer Gruppe, bestehend aus dem Bauebenen-Koordinatensystem und dem Bauplan-Koordinatensystem. Mittels der Erkennung des Lagebestimmungsmerkmals und der Möglichkeit, dessen Lage relativ zu wenigstens einem Koordinatensystem festzulegen, ist es vorteilhaft möglich, die Anordnung des Vorformlings in dem Arbeitsbereich mit hoher Genauigkeit festzustellen und somit wiederum den generativ zu fertigenden Bereich des Bauteils hochgenau auf dem Vorformling aufzubauen. Da die relative Lage der Koordinatensysteme zueinander hochgenau bestimmt werden kann, ist die geometrische Lage des Vorformlings in beiden Koordinatensystemen mit hoher Genauigkeit bekannt, sobald sie für eines der beiden Koordinatensysteme bestimmt ist.

Alternativ oder zusätzlich ist das Ausrichtmodul eingerichtet, um das Bauplan-Koordinatensystem relativ zu dem wenigstens einen Lagebestimmungsmerkmal auszurichten. Dies stellt eine besonders einfache Ausgestaltung dar, da das Lagebestimmungsmerkmal besonders gut erfasst werden kann. Dabei erfolgt eine implizite Ausrichtung des Bauplan-Koordinatensystem auf das Bauebenen-Koordinatensystem, wobei das Bauebenen-Koordinatensystem insbesondere durch das Lagebestimmungsmerkmal definiert sein kann. Insofern spannt vorzugsweise der in dem Arbeitsbereich und damit auch in der Bauebene angeordnete Vorformling mit dem wenigstens einen Lagebestimmungsmerkmal das Bauebenen-Koordinatensystem auf.

In bevorzugter Ausgestaltung ist das wenigstens eine Lagebestimmungsmerkmal eine mittels der ersten Sensoreinrichtung und/oder mittels der zweiten Sensoreinrichtung erfassbare Bohrung in dem Vorformling. Eine solche Bohrung kann in bevorzugter Weise insbesondere mittels Bilderkennung erkannt werden.

In bevorzugter Ausgestaltung ist das wenigstens eine Lagebestimmungsmerkmal eine mittels der ersten Sensoreinrichtung und/oder mittels der zweiten Sensoreinrichtung erfassbare Kante des Vorformlings. Unter einer solchen Kante ist insbesondere eine maschinell erkennbare Kante, insbesondere eine mithilfe eines Kantendetektionsalgorithmus erkennbare Kante, zu verstehen. Eine solche Kantenerkennung ermöglicht in sehr präziser und zugleich wenig aufwendiger Weise eine Ermittlung der Position des Vorformlings. Die Kante kann in bevorzugter Ausgestaltung insbesondere eine Bohrungskante einer Bohrung in dem Vorformling sein.

Alternativ oder zusätzlich ist das wenigstens eine Lagebestimmungsmerkmal bevorzugt eine Markierung, die auf einer Oberfläche des Vorformlings vorgesehen ist. Auch auf diese Weise kann eine sehr hohe Genauigkeit der Positionsermittlung für den Vorformling erzielt werden.

Die Oberfläche des Vorformlings, auf der die Markierung angeordnet ist, ist insbesondere der ersten Sensoreinrichtung und/oder der zweiten Sensoreinrichtung zugewandt. Insbesondere handelt es sich um eine Oberseite des Vorformlings.

Eine Markierung auf einer Oberfläche des Vorformlings bringt dort vorzugsweise zumindest eine Kante ein, die dann wiederum mittels Kantenerkennung, insbesondere automatisch, erkannt werden kann.

Gemäß einer Weiterbildung der Erfindung ist vorgesehen, dass die erste Sensoreinrichtung als optische Sensoreinrichtung ausgebildet ist, die eingerichtet ist, um eine optische Abbildung des ersten Erfassungsbereichs aufzunehmen. Vorzugsweise weist die erste Sensoreinrichtung mindestens eine Kamera auf. Vorzugsweise ist die erste Sensoreinrichtung, insbesondere die mindestens eine Kamera, eine Komponente einer Pulverbettüberwachungsvorrichtung einer Fertigungsvorrichtung zum generativen Fertigen eines Bauteils aus einem Pulvermaterial, insbesondere eine Pulverbettkamera. In diesem Fall bedarf es vorteilhaft keiner zusätzlichen Komponenten, um die erste Sensoreinrichtung bereitzustellen. Eine optische Sensoreinrichtung kann insbesondere eine geometrische Auflösung von mindestens 30 µm bis höchstens 500 µm, vorzugsweise von mindestens 100 µm bis höchstens 400 µm, vorzugsweise bis höchstens 300 µm, vorzugsweise bis höchstens 200 µm, aufweisen.

Gemäß einer Weiterbildung der Erfindung ist vorgesehen, dass die zweite Sensoreinrichtung eingerichtet ist, um eine Scannereinrichtung zur Verlagerung eines optischen Arbeitsstrahls der generativen Fertigungsvorrichtung in dem Arbeitsbereich anzusteuern, um Signalwerte von aus einem Wechselwirkungsbereich des optischen Arbeitsstrahls in dem Arbeitsbereich ausgehender elektromagnetischer Strahlung ortsabhängig zu erfassen, wobei jedem Ort der Verlagerung des optischen Arbeitsstrahls in dem Arbeitsbereich ein Signalwert zugeordnet wird, und um eine Abbildung des Arbeitsbereichs aus den ortsabhängig erfassten Signalwerten zu erhalten. Vorteilhaft weist eine derart ausgebildete zweite Sensoreinrichtung eine sehr hohe Messgenauigkeit auf. Insbesondere kann eine derart ausgestaltete zweite Sensoreinrichtung eine hohe Auflösung und/oder einen sehr geringen, vorzugsweise sogar verschwindenden Registrierungsfehler aufweisen. Weiterhin bedarf es bei einer Fertigungsvorrichtung zum generativen Fertigen eines Bauteils aus einem Pulvermaterial, die einen optischen Arbeitsstrahl für die generative Fertigung nutzt, vorteilhaft keiner aufwändigen zusätzlichen Vorrichtungen, um die zweite Sensoreinrichtung zu verwirklichen, da jedenfalls die Scannereinrichtung zur Verlagerung des optischen Arbeitsstrahls in dem Arbeitsbereich ohnehin vorgesehen ist. Eine derart ausgestaltete zweite Sensoreinrichtung kann insbesondere eine geometrische Auflösung von mindestens 10 µm bis höchstens 50 µm, vorzugsweise von mindestens 20 µm bis höchstens 40 µm, vorzugsweise bis höchstens 30 µm, aufweisen.

Unter einem optischen Arbeitsstrahl ist insbesondere gerichtete elektromagnetische Strahlung, kontinuierlich oder gepulst, zu verstehen, die im Hinblick auf ihre Wellenlänge oder einen Wellenlängenbereich geeignet ist zum generativen Fertigen eines Bauteils aus Pulvermaterial, insbesondere zum Sintern oder Schmelzen des Pulvermaterials. Insbesondere wird unter einem optischen Arbeitsstrahl ein Laserstrahl verstanden, der kontinuierlich oder gepulst erzeugt sein kann. Der optische Arbeitsstrahl weist bevorzugt eine Wellenlänge oder einen Wellenlängenbereich im sichtbaren elektromagnetischen Spektrum oder im infraroten elektromagnetischen Spektrum, oder im Überlappungsbereich zwischen dem infraroten Bereich und dem sichtbaren Bereich des elektromagnetischen Spektrums auf.

Unter einem Wechselwirkungsbereich des optischen Arbeitsstrahls in dem Arbeitsbereich wird insbesondere ein lokaler Bereich des Arbeitsbereichs verstanden, in dem der optische Arbeitsstrahl momentan mit in dem Arbeitsbereich angeordnetem Material, insbesondere Pulvermaterial, wechselwirkt.

Darunter, dass aus dem Wechselwirkungsbereich ausgehende elektromagnetische Strahlung erfasst wird, wird im Kontext der vorliegenden technischen Lehre insbesondere verstanden, dass aus dem Wechselwirkungsbereich abgestrahlte elektromagnetische Strahlung, insbesondere aus dem Wechselwirkungsbereich emittierte elektromagnetische Strahlung oder aus dem Wechselwirkungsbereich remittierte elektromagnetische Strahlung erfasst wird.

Unter aus dem Wechselwirkungsbereich abgestrahlter elektromagnetischer Strahlung wird dabei elektromagnetische Strahlung verstanden, die - unabhängig von einem konkreten physikalischen Mechanismus - aufgrund der Einstrahlung des optischen Arbeitsstrahls in den Wechselwirkungsbereich von dem Wechselwirkungsbereich ausgeht.

Unter aus dem Wechselwirkungsbereich emittierter elektromagnetischer Strahlung wird elektromagnetische Strahlung verstanden, die aufgrund der Wechselwirkung mit dem optischen Arbeitsstrahl in dem Wechselwirkungsbereich - insbesondere als Wärmestrahlung oder als Lumineszenz, insbesondere Fluoreszenz oder Phosphoreszenz - emittiert wird.

Unter aus dem Wechselwirkungsbereich remittierter elektromagnetischer Strahlung wird elektromagnetische Strahlung verstanden, die - insbesondere von einer Oberfläche in dem Wechselwirkungsbereich - reflektiert und/oder gestreut wird. Dabei wird unter "Reflexion" hier im engeren Sinne gerichtete Reflexion verstanden, während unter "Streuung" diffuse Reflexion, insbesondere gemäß dem Lambert'schen Gesetz, verstanden wird.

Die Signalwerte werden insbesondere punktweise, insbesondere eindimensional, ortsabhängig erfasst. Jedem Ort der Verlagerung des optischen Arbeitsstrahls wird also bevorzugt genau ein Signalwert zugeordnet. Ein solcher Signalwert ist insbesondere ein Helligkeitswert.

Unter einer Abbildung des Arbeitsbereichs wird demgegenüber insbesondere eine zweidimensionale Abbildung des Arbeitsbereichs, insbesondere des wenigstens einen ausgewählten Interessenbereichs des Arbeitsbereichs, verstanden. Die Abbildung wird insbesondere erhalten, indem sie aus den ortsabhängig erfassten Signalwerten zusammengesetzt, berechnet oder in anderer Weise gebildet wird.

Bevorzugt ist vorgesehen, dass der optische Arbeitsstrahl zum Erfassen des Arbeitsbereichs mit einer optischen Ausgangsleistung betrieben wird, die geringer ist als eine untere Leistungsgrenze für die optische Ausgangsleistung des optischen Arbeitsstrahls zum generativen Fertigen. Auf diese Weise wird eine Veränderung von in dem Arbeitsbereich angeordnetem Material, sei es Pulvermaterial oder ein Vorformling, vermieden. Die untere Leistungsgrenze ist dabei insbesondere so gewählt, dass erst ab dieser unteren Leistungsgrenze oder oberhalb dieser unteren Leistungsgrenze eine Materialveränderung, insbesondere ein Sintern oder Schmelzen, insbesondere von dem Pulvermaterial der generativen Fertigungsvorrichtung auftritt, sodass die generative Fertigung mit dem optischen Arbeitsstrahl möglich ist. Die optische Ausgangsleistung des optischen Arbeitsstrahls wird somit für die generative Fertigung bevorzugt höher gewählt als die untere Leistungsgrenze. Somit sind ein Betriebsmodus zum Erfassen des wenigstens einen ausgewählten Interessenbereichs einerseits und ein Betriebsmodus zum generativen Fertigen andererseits bezüglich der gewählten optischen Ausgangsleistung des optischen Arbeitsstrahls deutlich voneinander separiert.

Insbesondere wird derselbe optische Arbeitsstrahl - bis gegebenenfalls auf die Reduzierung der optischen Ausgangsleistung - sowohl für die generative Fertigung als auch für die Erfassung des wenigstens einen ausgewählten Interessenbereichs verwendet.

Die untere Leistungsgrenze beträgt gemäß einer bevorzugten Ausgestaltung 100 W, vorzugsweise 90 W, vorzugsweise 85 W. Der optische Arbeitsstrahl wird zum Erfassen des Arbeitsbereichs vorzugsweise mit einer optischen Ausgangsleistung von mindestens 1 W bis höchstens 99,9 W, vorzugsweise bis höchstens 89,9 W, vorzugsweise bis höchstens 84,9 W, insbesondere von mindestens 2 W bis höchstens 50 W betrieben. Zum generativen Fertigen wird der optische Arbeitsstrahl vorzugsweise mit einer optischen Ausgangsleistung von mindestens 90 W, vorzugsweise von mindestens 100 W, vorzugsweise mehr als 100 W, vorzugsweise von mindestens 90 W bis höchstens 500 W, betrieben.

Mittels der wie zuvor beschrieben ausgestalteten zweiten Sensoreinrichtung ist eine Kantenerkennung insbesondere anhand von scharfen Sprüngen in den ortsabhängig erfassten Signalwerten möglich. Insbesondere ändert sich an einer Kante das Abstrahlverhalten des Vorformlings unstetig. Dies gilt auch dann, wenn der Vorformling von Pulvermaterial, nämlich Arbeitspulver der generativen Fertigungsvorrichtung, umgeben oder in Pulvermaterial eingebettet ist, wobei eine der Scannereinrichtung zugewandte Oberfläche des Vorformlings nicht von Pulvermaterial bedeckt ist. Überschreitet der optische Arbeitsstrahl einen Rand dieser Oberfläche, ändert sich das Abstrahlverhalten insbesondere von starker Streuung durch das Pulvermaterial auf zumindest eher gerichtete Reflexion auf der Oberfläche des Vorformlings - oder umgekehrt. Dabei weist der Signalwert typischerweise ein höheres Niveau, insbesondere eine - je nach Art der Erfassung - höhere oder auch geringere Helligkeit, auf, wenn das Licht des optischen Arbeitsstrahls diffus zurückgestreut wird, als wenn es im Wesentlichen reflektiert wird.

Unter einem Arbeitspulver wird ein Pulvermaterial verstanden, welches in der generativen Fertigungsvorrichtung oder von der generativen Fertigungsvorrichtung zum Herstellen eines Bauteils aus dem Pulvermaterial verwendet wird.

Besonders bevorzugt wird das Verfahren durchgeführt mit einer aufgerauten Oberfläche des Vorformlings, wobei die Oberfläche besonders bevorzugt sand-, korund- oder glasperlengestrahlt ist. Auf diese Weise kann die Oberfläche des Vorformlings matt diffus streuende optische Eigenschaften aufweisen, sodass sie in der Abbildung des Arbeitsbereichs nicht einfach dunkel - gegebenenfalls mit einzelnen Glanzpunkten - erscheint, sondern vielmehr gut erkennbar ist. Wird die Rauheit der Oberfläche geeignet eingestellt, ergibt sich dennoch ein hervorragender Kontrast zu eventuell in der Umgebung der Oberfläche angeordnetem Pulvermaterial. Beispielsweise kann es so auch möglich sein, den Signalwert von der aufgerauten Oberfläche über das Niveau des Signalwerts der Streuung des Pulvermaterials zu erhöhen.

Gemäß einer Weiterbildung der Erfindung ist vorgesehen, dass die zweite Sensoreinrichtung eine auf der optischen Achse des optischen Arbeitsstrahls angeordnete Detektionseinrichtung aufweist und eingerichtet ist, um den Signalwert ortsabhängig zu erfassen, indem ein Ausgangssignal der Detektionseinrichtung zeitabhängig einem synchronen Zustand der Scannereinrichtung zugeordnet wird. Vorteilhaft weist in diesem Fall die zweite Sensoreinrichtung keinen Registrierungsfehler auf, da die Messung unmittelbar im Koordinatensystem des optischen Arbeitsstrahls und damit im Maschinen-Koordinatensystem erfolgt. Somit kann die zweite Messgenauigkeit sogar dann höher sein als die erste Messgenauigkeit, wenn die Auflösung der zweiten Sensoreinrichtung geringer sein sollte als die Auflösung der ersten Sensoreinrichtung. Vorzugsweise weist die zweite Sensoreinrichtung gleichwohl aber auch eine höhere Auflösung auf als die erste Sensoreinrichtung.

Die Erfassung der Signalwerte, hier also des Ausgangssignals der Detektionseinrichtung, und die Verlagerung des optischen Arbeitsstrahls durch entsprechende Steuerung der Scannereinrichtung erfolgt insbesondere synchron, sodass jedem Signalwert ein Zustand der Scannereinrichtung und damit zugleich ein Ort in dem Arbeitsbereich zugeordnet werden kann. Der Zustand der Scannereinrichtung ist insbesondere eine Position von wenigstens einem beweglichen Spiegel der Scannereinrichtung, insbesondere einem galvanometrischen Spiegel, die ihrerseits wiederum einem Ort in dem Arbeitsbereich zugeordnet ist, auf den der optische Arbeitsstrahl gerichtet ist. Die ortsaufgelöste Erfassung der Signalwerte erfolgt somit unmittelbar im Koordinatensystem der Scannereinrichtung und damit im Maschinen-Koordinatensystem.

Vorzugsweise weist die zweite Sensoreinrichtung einen Umlenkspiegel auf, über den der optische Arbeitsstrahl umgelenkt wird, wobei die Reflektivität des Umlenkspiegels kleiner ist als 100 %, sodass ein Anteil der entlang der optischen Achse abgestrahlten elektromagnetischen Strahlung durch den Umlenkspiegel hindurchtritt und auf die hinter dem Umlenkspiegel angeordnete Detektionseinrichtung fällt. Alternativ ist es auch möglich, dass der optische Arbeitsstrahl durch den Umlenkspiegel hindurchgeschickt wird, wobei dieser dann eine Transmissivität von weniger als 100 % aufweist, wobei in diesem Fall die Detektionseinrichtung derart angeordnet ist, dass die abgestrahlte elektromagnetische Strahlung durch den Umlenkspiegel teilweise umgelenkt und zu der Detektionseinrichtung geleitet wird.

Weiter ist es auch bevorzugt möglich, dass der optische Arbeitsstrahl durch eine Öffnung eines Umlenkspiegels hindurchtritt, wobei die abgestrahlte elektromagnetische Strahlung von der die Öffnung umgebenden Oberfläche des Umlenkspiegels zumindest teilweise umgelenkt und zu der Detektionseinrichtung geleitet wird. Insbesondere kann ein sogenannter Scraper-Spiegel verwendet werden.

Ist der Umlenkspiegel eingerichtet zur Umlenkung des optischen Arbeitsstrahls und zur Transmission der abgestrahlten elektromagnetischen Strahlung, weist er bevorzugt eine Reflektivität von mindestens 99 % bis höchstens 99,98 % auf. Ist der Umlenkspiegel eingerichtet zur Transmission des optischen Arbeitsstrahls und zur Reflexion der abgestrahlten elektromagnetischen Strahlung, weist er bevorzugt eine Transmissivität von mindestens 99 % bis höchstens 99,98 % auf.

Alternativ ist es auch möglich, anstelle des Umlenkspiegels einen Polarisationsstrahlteiler zu verwenden, wobei der optische Arbeitsstrahl in diesem Fall bevorzugt linear polarisiert ist. Durch die Abstrahlung in dem Wechselwirkungsbereich wird die Polarisation zumindest teilweise zerstört, wobei dann die zum einfallenden Arbeitsstrahl senkrechte Polarisationsrichtung nur das abgestrahlte Signal enthält. Der Polarisationsstrahlteiler reflektiert somit bevorzugt die mit einer bestimmten Polarisationsrichtung linear polarisierte, einfallende elektromagnetische Strahlung des optischen Arbeitsstrahls und transmittiert die zu der bestimmten Polarisationsrichtung senkrechte Polarisationsrichtung - oder umgekehrt.

Vorzugsweise ist die Detektionseinrichtung als Fotodiode ausgebildet oder weist wenigstens eine Fotodiode auf. Als Fotodiode wird bevorzugt eine Silizium-Fotodiode verwendet. Es ist möglich, dass die Fotodiode empfindlich ist im sichtbaren und/oder infraroten Spektralbereich. Vorzugsweise ist die Empfindlichkeit der Fotodiode abgestimmt auf den Wellenlängenbereich des optischen Arbeitsstrahls. In bevorzugter Weise kann eine Infrarot-Fotodiode oder eine Pyrometer-Diode verwendet werden.

Alternativ oder zusätzlich weist die zweite Sensoreinrichtung eine Wärmebildkamera auf, die angeordnet und eingerichtet ist, um den Arbeitsbereich zu erfassen. Die zweite Sensoreinrichtung ist eingerichtet, um den Signalwert durch Aufnahme eines Wärmebilds mit der Wärmebildkamera ortsabhängig zu erfassen. Auch in diesem Fall kann der Registrierungsfehler der zweiten Sensoreinrichtung sehr gering ausfallen oder sogar verschwinden, indem vorteilhaft aus dem erfassten Wärmebild die jeweilige Position des optischen Arbeitsstrahls abgeleitet wird. Hierzu kann in bevorzugter Ausgestaltung ein vorbestimmtes Intensitätsprofil des optischen Arbeitsstrahls, beispielsweise ein Gauß-Profil, an einen im Wärmebild erfassten Intensitätsverlauf der detektierten Wärmestrahlung angepasst, das heißt gefittet, werden, wobei eine momentane Position des optischen Arbeitsstrahls mit einem Maximum des an den erfassten Intensitätsverlauf angepassten vorbestimmten Intensitätsprofils identifiziert werden kann. Auf diese Weise ist eine Messung mit höchstens sehr kleinem Fehler im Koordinatensystem des optischen Arbeitsstrahls und damit im Maschinen-Koordinatensystem möglich. Auch bei dieser Ausgestaltung kann daher die zweite Sensoreinrichtung selbst dann eine höhere Messgenauigkeit aufweisen als die erste Sensoreinrichtung, wenn ihre Auflösung geringer ist als die Auflösung der ersten Sensoreinrichtung; insbesondere selbst dann, wenn die Auflösung der Wärmebildkamera geringer ist als die Auflösung einer optischen Kamera der ersten Sensoreinrichtung. Vorzugsweise ist aber gleichwohl auch bei dieser Ausgestaltung die Auflösung der zweiten Sensoreinrichtung höher als die Auflösung der ersten Sensoreinrichtung.

Gemäß einer Weiterbildung der Erfindung ist vorgesehen, dass das Auswahlmodul eingerichtet ist, um den wenigstens einen Interessenbereich automatisch auszuwählen. Dies erspart einem Bediener der Messvorrichtung vorteilhaft eine manuelle Auswahl.

Alternativ oder zusätzlich ist das Auswahlmodul eingerichtet, um eine Nutzer-Schnittstelle bereitzustellen, die eine Auswahl des wenigstens einen Interessenbereichs durch einen Benutzer der Messvorrichtung ermöglicht. Dies erlaubt dem Bediener der Messvorrichtung vorteilhaft eine größere Freiheit in der Auswahl des wenigstens einen Interessenbereichs. Vorzugsweise weist die Messvorrichtung die Nutzer-Schnittstelle auf.

Gemäß einer Weiterbildung der Erfindung ist vorgesehen, dass das Ausrichtmodul eingerichtet ist, um zumindest eine Ausrichtung des Bauplan-Koordinatensystems relativ zu dem Bauebenen-Koordinatensystem, die ausgewählt ist aus einer Gruppe, bestehend aus der Winkelausrichtung und der Translationsausrichtung, automatisch zu bestimmen. Dies erspart einem Bediener der Messvorrichtung vorteilhaft eine manuelle Bestimmung der zumindest eine Ausrichtung.

Alternativ oder zusätzlich ist das Ausrichtmodul eingerichtet, um eine Nutzer-Schnittstelle bereitzustellen, die zumindest eine Ausrichtung des Bauplan-Koordinatensystems relativ zu dem Bauebenen-Koordinatensystem, die ausgewählt ist aus einer Gruppe, bestehend aus der Winkelausrichtung und der Translationsausrichtung, durch einen Benutzer der Messvorrichtung ermöglicht. Dies erlaubt dem Bediener der Messvorrichtung vorteilhaft eine größere Freiheit in der Bestimmung der zumindest eine Ausrichtung. Vorzugsweise weist die Messvorrichtung die Nutzer-Schnittstelle auf.

Gemäß einer Weiterbildung der Erfindung ist vorgesehen, dass die Messvorrichtung ein Darstellungsmodul aufweist, das eingerichtet ist, um eine Gesamt-Darstellung des wenigstens einen ausgewählten Interessenbereichs in dem ersten Erfassungsbereich zu berechnen. Die Gesamt-Darstellung erlaubt aber vorteilhaft sowohl einen Überblick über den ersten Erfassungsbereich als auch eine Detailbetrachtung des wenigstens einen Interessenbereichs in derselben Darstellung.

Insbesondere ist das Darstellungsmodul bevorzugt eingerichtet, um die Gesamt-Darstellung zu berechnen, indem eine erste Darstellung des ersten Erfassungsbereichs mit einer zweiten Darstellung des Interessenbereichs überblendet wird. Dies stellt eine besonders einfache und insbesondere wenig rechenintensive und dadurch ressourcenschonende Ausgestaltung der Gesamt-Darstellung dar. Bevorzugt ist ein Überblendungsgrad der ersten Darstellung mit der zweiten Darstellung einstellbar, vorzugsweise variabel einstellbar, besonders bevorzugt - insbesondere variabel - durch einen Benutzer vorgebbar.

Alternativ oder zusätzlich ist das Darstellungsmodul bevorzugt eingerichtet, um die Gesamt-Darstellung zu berechnen, indem die erste Darstellung des ersten Erfassungsbereichs mit der zweiten Darstellung des Interessenbereichs zu der Gesamt-Darstellung verrechnet wird. Dies erlaubt vorteilhaft eine besonders exakte Darstellung des Interessenbereichs in der Gesamt-Darstellung.

Gemäß einer Weiterbildung der Erfindung ist vorgesehen, dass das Darstellungsmodul eingerichtet ist, um eine AR-Darstellung des Arbeitsbereichs derart zu berechnen, dass in der AR-Darstellung die Gesamt-Darstellung in dem Arbeitsbereich, insbesondere in einer - insbesondere in Echtzeit aufgenommenen - optischen Aufnahme des Arbeitsbereichs, dargestellt wird. Unter einer AR-Darstellung wird dabei eine Darstellung gemäß dem Prinzip der augmentierten Realität (Augmented Reality - AR) verstanden. Die AR-Darstellung ermöglicht einem Benutzer vorteilhaft eine Ansicht der Gesamt-Darstellung innerhalb des realen Arbeitsbereichs, insbesondere in Echtzeit.

Vorzugsweise wird in der AR-Darstellung die Gesamt-Darstellung in dem Arbeitsbereich, insbesondere in der optischen Aufnahme des Arbeitsbereichs, dargestellt, indem die Gesamt-Darstellung mit dem Arbeitsbereich, insbesondere mit der optischen Aufnahme des Arbeitsbereichs, überblendet wird. Dies stellt eine besonders einfache und insbesondere wenig rechenintensive und daher ressourcenschonende Ausgestaltung zur Erzeugung der AR-Darstellung dar.

Gemäß einer Weiterbildung der Erfindung ist vorgesehen, dass das Darstellungsmodul eingerichtet ist, um in der Gesamt-Darstellung oder in der AR-Darstellung wenigstens ein Koordinatensystem, das ausgewählt ist aus einer Gruppe, bestehend aus dem Bauebenen-Koordinatensystem und dem Bauplan-Koordinatensystem, darzustellen. Dies erlaubt einem Benutzer vorteilhaft einen genauen Überblick über das wenigstens eine Koordinatensystem im Kontext der Gesamt-Darstellung oder der AR-Darstellung.

Alternativ oder zusätzlich ist das Darstellungsmodul eingerichtet, um in der Gesamt-Darstellung oder in der AR-Darstellung Bestrahlungsvektoren für die generative Fertigung eines Bauteils in dem Arbeitsbereich darzustellen. Dies erlaubt einem Benutzer vorteilhaft eine Betrachtung und gegebenenfalls unmittelbar zugängliche Manipulation der Bestrahlungsvektoren.

Unter einem Bestrahlungsvektor wird insbesondere eine kontinuierliche, vorzugsweise lineare Verlagerung des optischen Arbeitsstrahls in dem Arbeitsbereich über eine bestimmte Strecke mit bestimmter Verlagerungsrichtung verstanden. Der Bestrahlungsvektor schließt also die Richtung oder Orientierung der Verlagerung ein.

Gemäß einer Weiterbildung der Erfindung ist vorgesehen, dass das Ausrichtmodul eingerichtet ist, um Lageinformationen entlang einer sich senkrecht zu der Bauebene erstreckenden Koordinate mit wenigstens einem Koordinatensystem zu verknüpfen, wobei das wenigstens eine Koordinatensystem ausgewählt ist aus einer Gruppe, bestehend aus dem Bauebenen-Koordinatensystem und dem Bauplan-Koordinatensystem. Auf diese Weise können vorteilhaft 3D-Höheninformationen mit dem wenigstens einen Koordinatensystem verknüpft werden. Beispielsweise kann so eine dreidimensionale Lage des Vorformlings in dem Arbeitsbereich bestimmt werden, insbesondere zum Zweck der Justage oder zum Ermitteln der Lage des Vorformlings relativ zu einer Substratplatte, und/oder zur Feststellung einer Null-Höhenlage. Die Lageinformationen entlang der sich senkrecht zu der Bauebene erstreckenden Koordinate können vorteilhaft beispielsweise mittels Streifenprojektion oder anderer geeigneter Verfahren gewonnen werden.

Auch andere Informationen können alternativ oder zusätzlich mit dem wenigstens einem Koordinatensystem verknüpft werden, beispielsweise Informationen über eine Oberflächentextur insbesondere des wenigstens einen Vorformlings.

Gemäß einer Weiterbildung der Erfindung ist vorgesehen, dass das Ausrichtmodul eingerichtet ist, um eine Mehrzahl von optischen Arbeitsstrahlen der Fertigungsvorrichtung relativ zu mindestens einem Koordinatensystem auszurichten, wobei das wenigstens eine Koordinatensystem ausgewählt ist aus einer Gruppe, bestehend aus dem Bauebenen-Koordinatensystem und dem Bauplan-Koordinatensystem. Auf diese Weise können vorteilhaft mehrere optische Arbeitsstrahlen relativ zu dem mindestens ein Koordinatensystem und damit zugleich relativ zueinander ausgerichtet werden, was die Genauigkeit der Fertigung des herzustellenden Bauteils insbesondere dann erhöht, wenn die mehreren optischen Arbeitsstrahlen zur Herstellung desselben Bauteils - insbesondere zur Herstellung verschiedener Bereiche desselben Bauteils - verwendet werden.

Es ist in bevorzugter Ausgestaltung auch möglich, dass eine Mehrzahl verschiedener Sensoreinrichtungen, insbesondere erster und/oder zweiter Sensoreinrichtungen, miteinander fusioniert oder kombiniert werden. Dabei können insbesondere verschiedenartige und/oder gleichartige Sensoreinrichtungen miteinander fusioniert oder kombiniert werden. Insbesondere ist es möglich, eine Mehrzahl von Kamerabildern verschiedener Kameras miteinander zu fusionieren. Auch ist es möglich, eine Mehrzahl zweiter Sensoreinrichtungen, welche einen optischen Arbeitsstrahl verwenden, miteinander zu fusionieren oder zu kombinieren, insbesondere wenn eine die Messvorrichtung aufweisende Befestigungsvorrichtung eine Mehrzahl optischer Arbeitsstrahlen aufweist. Dabei kann insbesondere jeder optische Arbeitsstrahl einer eigenen zweiten Sensoreinrichtung zugeordnet sein. Vorteilhaft kann damit zugleich eine Registrierung der verschiedenen optischen Arbeitsstrahlen relativ zueinander gewährleistet werden.

Die Messvorrichtung ist bevorzugt eingerichtet zur Durchführung eines im Folgenden beschriebenen erfindungsgemäßen Verfahrens oder einer im Folgenden beschriebenen Ausführungsform des Verfahrens.

Die Aufgabe wird auch gelöst, indem eine Fertigungsvorrichtung zum generativen Fertigen eines Bauteils aus einem Pulvermaterial geschaffen wird, die eine Strahleinrichtung aufweist, wobei die Strahleinrichtung eingerichtet ist zum Erzeugen von wenigstens einem optischen Arbeitsstrahl, um ein Bauteil mittels des wenigstens einen optischen Arbeitsstrahls generativ aus einem Pulvermaterial zu fertigen. Die Fertigungsvorrichtung weist außerdem einen in einer Bauebene angeordneten Arbeitsbereich auf, der eingerichtet ist zum generativen Fertigen eines Bauteils aus dem Pulvermaterial in dem Arbeitsbereich. Weiterhin weist die Fertigungsvorrichtung wenigstens eine Scannereinrichtung auf, die eingerichtet ist zum Verlagern des wenigstens einen optischen Arbeitsstrahls in dem Arbeitsbereich. Die Fertigungsvorrichtung weist eine Steuereinrichtung auf, die mit der wenigstens einen Scannereinrichtung wirkverbunden und eingerichtet ist, um die wenigstens eine Scannereinrichtung zum Verlagern des wenigstens einen optischen Arbeitsstrahls in dem Arbeitsbereich anzusteuern. Die Fertigungsvorrichtung weist eine erfindungsgemäße Messvorrichtung oder eine Messvorrichtung nach einer oder mehreren der zuvor beschriebenen Ausführungsformen auf. In Zusammenhang mit der Fertigungsvorrichtung ergeben sich insbesondere die Vorteile, die bereits in Zusammenhang mit der Messvorrichtung beschrieben wurden.

Das Auswahlmodul, das Ausrichtmodul und vorzugsweise das Darstellungsmodul sind bevorzugt Teil der Steuereinrichtung oder in die Steuereinrichtung implementiert. Insbesondere sind bevorzugt die Funktionen des Auswahlmoduls, des Ausrichtmoduls und vorzugsweise des Darstellungsmoduls in die Steuereinrichtung implementiert oder werden von der Steuereinrichtung übernommen.

Die Fertigungsvorrichtung ist bevorzugt eingerichtet zur Durchführung eines im Folgenden beschriebenen erfindungsgemäßen Verfahrens oder einer im Folgenden beschriebenen Ausführungsform des Verfahrens.

Bei einer Ausführungsform ist die Strahleinrichtung eingerichtet, um eine Mehrzahl von optischen Arbeitsstrahlen zu erzeugen, und/oder die Fertigungsvorrichtung weist eine Mehrzahl von Strahleinrichtungen zur Erzeugung einer Mehrzahl von optischen Arbeitsstrahlen auf. Es ist möglich, dass für die Mehrzahl von optischen Arbeitsstrahlen eine Mehrzahl von jeweils zugeordneten Scannereinrichtungen vorgesehen sind. Es ist aber auch möglich, dass die Scannereinrichtung eingerichtet ist, um eine Mehrzahl von optischen Arbeitsstrahlen - insbesondere unabhängig voneinander - auf dem Arbeitsbereich zu verlagern. Insbesondere kann die Scannereinrichtung hierfür eine Mehrzahl von separat ansteuerbaren Scannern, insbesondere Scannerspiegeln, aufweisen.

Die Scannereinrichtung weist bevorzugt mindestens einen Scanner, insbesondere einen Galvanometer-Scanner, Piezoscanner, Polygonscanner, MEMS-Scanner, und/oder einen relativ zu dem Arbeitsbereich verlagerbaren Arbeitskopf oder Bearbeitungskopf auf. Die hier vorgeschlagenen Scannereinrichtungen sind in besonderer Weise geeignet, den optischen Arbeitsstrahl innerhalb des Arbeitsbereichs zwischen einer Mehrzahl von Bestrahlungspositionen zu verlagern.

Unter einem relativ zu dem Arbeitsbereich verlagerbaren Arbeitskopf oder Bearbeitungskopf wird hier insbesondere ein integriertes Bauteil der Fertigungsvorrichtung verstanden, welches mindestens einen Strahlungsauslass für mindestens einen optischen Arbeitsstrahl aufweist, wobei das integrierte Bauteil, das heißt der Arbeitskopf, als Ganzes entlang zumindest einer Verlagerungsrichtung, vorzugsweise entlang zweier senkrecht aufeinander stehenden Verlagerungsrichtungen, relativ zu dem Arbeitsbereich verlagerbar ist. Ein solcher Arbeitskopf kann insbesondere in Portalbauweise ausgebildet sein oder von einem Roboter geführt werden. Insbesondere kann der Arbeitskopf als Roboterhand eines Roboters ausgebildet sein.

Die Steuereinrichtung ist vorzugsweise ausgewählt aus einer Gruppe, bestehend aus einem Computer, insbesondere Personal Computer (PC), einer Einschubkarte oder Ansteuerkarte, und einem FPGA-Board. In bevorzugter Ausgestaltung ist die Steuereinrichtung eine RTC6-Ansteuerkarte der SCANLAB GmbH, insbesondere in der an dem den Zeitrang des vorliegenden Schutzrechts bestimmenden Tag aktuell erhältlichen Ausgestaltung.

Bevorzugt ist die Strahleinrichtung als Laser ausgebildet. Der optische Arbeitsstrahl wird somit vorteilhaft als intensiver Strahl kohärenter elektromagnetischer Strahlung, insbesondere kohärenten Lichts, erzeugt. Bestrahlung bedeutet insoweit bevorzugt Belichtung.

Die Fertigungsvorrichtung ist vorzugsweise eingerichtet zur Durchführung eines Verfahrens, ausgewählt aus einer Gruppe, bestehend aus einem selektiven Lasersintern, einem selektiven Laserschmelzen, einem Laser-Metall-Fusionieren (Laser Metal Fusion - LMF), einem direkten Metall-Laser-Schmelzen (Direct Metal Laser Melting - DMLM), einem Laser Net Shaping Manufacturing (LNSM), und einem Laser Engineered Net Shaping (LENS). Diese Ausgestaltungen der Fertigungsvorrichtung haben sich als besonders vorteilhaft erwiesen.

Gemäß einer Weiterbildung der Erfindung ist vorgesehen, dass die Fertigungsvorrichtung eine Ausgabevorrichtung aufweist, die mit der Messvorrichtung, insbesondere mit dem Darstellungsmodul, wirkverbunden und eingerichtet ist, um zumindest eine durch das Darstellungsmodul berechnete Darstellung auszugeben, die ausgewählt ist aus einer Gruppe, bestehend aus der Gesamt-Darstellung und der AR-Darstellung. Die Ausgabevorrichtung ist in bevorzugter Ausgestaltung als Bildschirm oder Monitor, Head-Up-Display, oder als Datenbrille, insbesondere 3D-Brille, ausgebildet.

Die Aufgabe wird schließlich auch gelöst, indem ein Verfahren zum Betreiben einer Fertigungsvorrichtung zum generativen Fertigen eines Bauteils aus einem Pulvermaterial geschaffen wird, wobei ein erster Erfassungsbereich eines in einer Bauebene angeordneten Arbeitsbereichs der Fertigungsvorrichtung mit einer ersten Messgenauigkeit erfasst wird. Es wird wenigstens ein Interessenbereich innerhalb des ersten Erfassungsbereichs ausgewählt. Der wenigstens eine ausgewählte Interessenbereich wird mit einer zweiten Messgenauigkeit erfasst, wobei die zweite Messgenauigkeit höher ist als die erste Messgenauigkeit. Schließlich wird wenigstens eine Ausrichtung des Bauplan-Koordinatensystems relativ zu dem Bauebenen-Koordinatensystem anhand des erfassten Interessenbereichs bestimmt, wobei die wenigstens eine Ausrichtung ausgewählt ist aus einer Gruppe, bestehend aus einer Winkelausrichtung und einer Translationsausrichtung. In Zusammenhang mit dem Verfahren ergeben sich insbesondere diejenigen Vorteile, die bereits in Zusammenhang mit der Messvorrichtung und der Fertigungsvorrichtung erläutert wurden.

Vorzugsweise umfasst das Verfahren mindestens einen Verfahrensschritt, der zuvor explizit oder implizit in Zusammenhang mit der Messvorrichtung oder der Fertigungsvorrichtung erläutert wurde.

Gemäß einer Weiterbildung der Erfindung ist vorgesehen, dass die Winkelausrichtung des Bauplan-Koordinatensystems relativ zu dem Bauebenen-Koordinatensystem anhand wenigstens eines erfassten Bereichs bestimmt wird, der ausgewählt ist aus einer Gruppe, bestehend aus dem erfassten ersten Erfassungsbereich und dem erfassten Interessenbereich. Die Translationsausrichtung des Bauplan-Koordinatensystems relativ zu dem Bauebenen-Koordinatensystem wird anhand des erfassten Interessenbereichs bestimmt.

Gemäß einer Weiterbildung der Erfindung ist vorgesehen, dass eine geometrische Lage von wenigstens einem Vorformling in der Bauebene relativ zu wenigstens einem Koordinatensystem ermittelt wird, wobei das wenigstens eine Koordinatensystem ausgewählt ist aus einer Gruppe, bestehend aus dem Bauebenen-Koordinatensystem und dem Bauplan-Koordinatensystem. Sodann wird vorzugsweise ein Bauteil auf dem Vorformling generativ aufgebaut.

Vorzugsweise wird wenigstens ein Lagebestimmungsmerkmal des Vorformlings erkannt, und die geometrische Lage des Vorformlings wird ermittelt, indem eine geometrische Lage des wenigstens einen Lagebestimmungsmerkmals relativ zu wenigstens einem der Koordinatensysteme festgelegt wird. Alternativ oder zusätzlich wird bevorzugt das Bauplan-Koordinatensystem relativ zu dem wenigstens einen Lagebestimmungsmerkmal ausgerichtet.

Vorzugsweise wird als die erste Sensoreinrichtung eine optische Sensoreinrichtung verwendet, die eingerichtet ist, um eine optische Abbildung des ersten Erfassungsbereichs aufzunehmen. Besonders bevorzugt wird als die erste Sensoreinrichtung mindestens eine Kamera, insbesondere eine Pulverbettkamera, verwendet.

Gemäß einer bevorzugten Ausgestaltung wird als die zweite Sensoreinrichtung eine Sensoreinrichtung verwendet, die eingerichtet ist, um eine Scannereinrichtung zur Verlagerung eines optischen Arbeitsstrahls der generativen Fertigungsvorrichtung in dem Arbeitsbereich anzusteuern, wobei Signalwerte von aus einem Wechselwirkungsbereich des optischen Arbeitsstrahls in dem Arbeitsbereich ausgehender elektromagnetischer Strahlung ortsabhängig erfasst werden, wobei jedem Ort der Verlagerung des optischen Arbeitsstrahls in dem Arbeitsbereich ein Signalwert zugeordnet wird, und wobei eine Abbildung des Arbeitsbereichs aus den ortsabhängig erfassten Signalwerten erhalten wird.

Vorzugsweise werden die Signalwerte mittels einer auf einer optischen Achse des optischen Arbeitsstrahls angeordneten, bevorzugt wenigstens eine Fotodiode aufweisenden Detektionseinrichtung ortsabhängig erfasst, indem ein Ausgangssignal der Detektionseinrichtung zeitabhängig einem synchronen Zustand der Scannereinrichtung zugeordnet wird. Alternativ oder zusätzlich wird bevorzugt der Arbeitsbereich durch eine Wärmebildkamera erfasst, wobei die Signalwerte durch Aufnahme eines Wärmebilds mit der Wärmebildkamera ortsabhängig erfasst werden.

Vorzugsweise wird der wenigstens einen Interessenbereich automatisch ausgewählt. Alternativ oder zusätzlich wird der wenigstens eine Interessenbereich durch einen Benutzer der Messvorrichtung - insbesondere manuell - ausgewählt.

Vorzugsweise wird zumindest eine Ausrichtung des Bauplan-Koordinatensystems relativ zu dem Bauebenen-Koordinatensystem, ausgewählt aus der Winkelausrichtung und der Translationsausrichtung, automatisch bestimmt. Alternativ oder zusätzlich wird die mindestens eine Ausrichtung durch einen Benutzer der Messvorrichtung - insbesondere manuell - bestimmt.

Vorzugsweise wird eine Gesamt-Darstellung des Interessenbereichs in dem erfassten Erfassungsbereich berechnet, insbesondere indem eine zweite Darstellung des Interessenbereichs einer ersten Darstellung des erfassten Erfassungsbereichs überblendet wird, und/oder in dem die erste Darstellung des erfassten Erfassungsbereichs mit der zweiten Darstellung des Interessenbereichs zu der Gesamt-Darstellung verrechnet wird.

Vorzugsweise wird eine AR-Darstellung des Arbeitsbereichs derart berechnet, dass in der AR-Darstellung die Gesamt-Darstellung in dem Arbeitsbereich, insbesondere in einer - insbesondere in Echtzeit aufgenommenen - optischen Aufnahme des Arbeitsbereichs, dargestellt wird, vorzugsweise durch Überblendung der Gesamt-Darstellung mit dem Arbeitsbereich, insbesondere mit der optischen Aufnahme des Arbeitsbereichs.

Vorzugsweise wird in der Gesamt-Darstellung oder in der AR-Darstellung wenigstens ein Koordinatensystem, ausgewählt aus dem Bauebenen-Koordinatensystem und dem Bauplan-Koordinatensystem, dargestellt. Alternativ oder zusätzlich werden in der AR-Darstellung oder in der Gesamt-Darstellung Bestrahlungsvektoren für die generative Fertigung eines Bauteils in dem Arbeitsbereich dargestellt.

Vorzugsweise werden Lageinformationen entlang einer sich senkrecht zu der Bauebene erstreckenden Koordinate mit wenigstens einem Koordinatensystem, ausgewählt aus dem Bauebenen-Koordinatensystem und dem Bauplan-Koordinatensystem, verknüpft.

Vorzugsweise wird eine Mehrzahl von optischen Arbeitsstrahlen der Fertigungsvorrichtung relativ zu mindestens einem Koordinatensystem, ausgewählt aus dem Bauebenen-Koordinatensystem und dem Bauplan-Koordinatensystem, ausgerichtet.

Als Strahleinrichtung wird vorzugsweise ein Laser verwendet.

Vorzugsweise wird das Bauteil mittels eines Verfahrens gefertigt, dass ausgewählt ist aus einer Gruppe, bestehend aus einem selektiven Lasersintern, einem selektiven Laserschmelzen, einem Laser-Metall-Fusionieren (Laser Metal Fusion - LMF), einem direkten Metall-Laser-Schmelzen (Direct Metal Laser Melting - DMLM), einem Laser Net Shaping Manufacturing (LNSM), und einem Laser Engineered Net Shaping (LENS).

Als Pulvermaterial kann in bevorzugter Weise insbesondere ein metallisches oder keramisches Pulver verwendet werden.

Die Aufgabe wird im Folgenden anhand der Zeichnung näher erläutert. Dabei zeigen:
- Figur 1: eine schematische Darstellung eines ersten Ausführungsbeispiels einer Fertigungsvorrichtung zum generativen Fertigen eines Bauteils aus einem Pulvermaterial mit einem ersten Ausführungsbeispiel einer Messvorrichtung, und
- Figur 2: eine schematische Darstellung eines zweiten Ausführungsbeispiels einer Fertigungsvorrichtung zum generativen Fertigen eines Bauteils aus einem Pulvermaterial mit einem zweiten Ausführungsbeispiel einer Messvorrichtung.

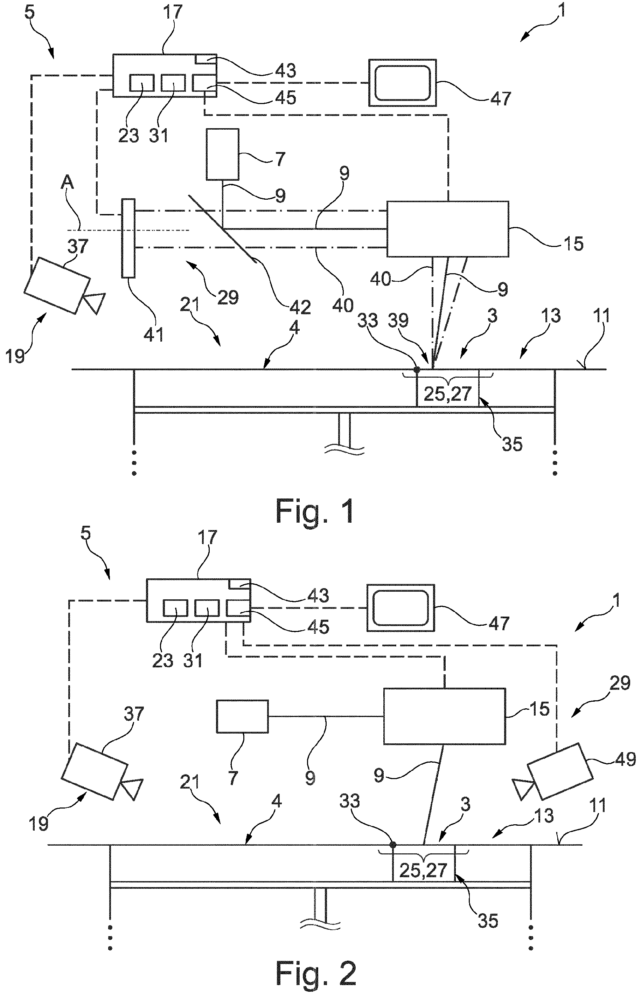

**Fig. 1** zeigt eine schematische Darstellung eines ersten Ausführungsbeispiels einer Fertigungsvorrichtung 1 zum generativen Fertigen eines Bauteils 3 aus einem Pulvermaterial 4 mit einem ersten Ausführungsbeispiel einer Messvorrichtung 5.

Die Fertigungsvorrichtung 1 weist eine Strahleinrichtung 7 auf, die eingerichtet ist, um wenigstens einen optischen Arbeitsstrahl 9 zu erzeugen. Die Fertigungsvorrichtung 1 ist außerdem eingerichtet, um mittels des wenigstens einen optischen Arbeitsstrahls 9 das Bauteil 3 generativ aus dem Pulvermaterial 4 zu fertigen. Die Fertigungsvorrichtung 1 weist außerdem einen in einer Bauebene 11 angeordneten Arbeitsbereich 13 auf, wobei in dem Arbeitsbereich 13 das Bauteil 3 generativ aus dem Pulvermaterial 4 gefertigt werden kann. Weiterhin weist die Fertigungsvorrichtung 1 eine Scannereinrichtung 15 auf, die eingerichtet ist, um den wenigstens einen optischen Arbeitsstrahl 9 in dem Arbeitsbereich 13 zu verlagern. Die Fertigungsvorrichtung 1 weist außerdem eine Steuereinrichtung 17 auf, die mit der wenigstens einen Scannereinrichtung 15 wirkverbunden und eingerichtet ist, um die wenigstens eine Scannereinrichtung 15 zum Verlagern des wenigstens einen optischen Arbeitsstrahls 9 in dem Arbeitsbereich 13 anzusteuern.

Die Fertigungseinrichtung 1 weist außerdem die Messvorrichtung 5 auf. Diese ist eingerichtet, um ein Bauplan-Koordinatensystem auf ein Bauebenen-Koordinatensystem des Arbeitsbereichs 13 auszurichten. Hierzu weist die Messvorrichtung 5 eine erste Sensoreinrichtung 19 auf, die eingerichtet ist, um einen ersten Erfassungsbereich 21 des Arbeitsbereichs 13, insbesondere den gesamten Arbeitsbereich 13, mit einer ersten Messgenauigkeit zu erfassen. Die Messvorrichtung 5 weist ein bei dem hier dargestellten Ausführungsbeispiel in die Steuereinrichtung 17 implementiertes Auswahlmodul 23 auf, das eingerichtet ist, um wenigstens einen Interessenbereich 25, insbesondere als einen zweiten Erfassungsbereich 27, innerhalb des ersten Erfassungsbereichs 21 auszuwählen. Außerdem weist die Messvorrichtung 5 eine zweite Sensoreinrichtung 29 auf, die eingerichtet ist, um den wenigstens einen ausgewählten Interessenbereich 25 mit einer zweiten Messgenauigkeit zu erfassen. Die zweite Messgenauigkeit ist höher als die erste Messgenauigkeit. Die Messvorrichtung 5 weist außerdem ein bei dem hier dargestellten Ausführungsbeispiel in die Steuereinrichtung 17 implementiertes Ausrichtmodul 31 auf, das eingerichtet ist, um wenigstens eine Ausrichtung des Bauplan-Koordinatensystems relativ zu dem Bauebenen-Koordinatensystem, ausgewählt aus einer Winkelausrichtung und einer Translationsausrichtung, anhand des erfassten Interessenbereichs 25 zu bestimmen. Dies ermöglicht insbesondere eine Sensorfusion der ersten Sensoreinrichtung 19 mit der zweiten Sensoreinrichtung 29, insbesondere bevorzugt eine multiskalige Sensorfusion, insbesondere auf verschiedenen Längenskalen.

Das Ausrichtmodul 31 ist bevorzugt eingerichtet, um die Winkelausrichtung des Bauplan-Koordinatensystems relativ zu dem Bauebenen-Koordinatensystem anhand wenigstens eines erfassten Bereichs, ausgewählt aus dem erfassten ersten Erfassungsbereich 21 und dem erfassten Interessenbereich 25, zu bestimmen, und um die Translationsausrichtung des Bauplan-Koordinatensystems relativ zu dem Bauebenen-Koordinatensystem anhand des erfassten Interessenbereichs 25 zu bestimmen.

Bevorzugt ist das Ausrichtmodul 31 eingerichtet, um wenigstens ein Lagebestimmungsmerkmal 33 von wenigstens einem in dem Arbeitsbereich 13 angeordneten Vorformling 35 zu erkennen, und um eine geometrische Lage des wenigstens einen Lagebestimmungsmerkmals 33 relativ zu wenigstens einem Koordinatensystem, ausgewählt aus dem Bauebenen-Koordinatensystem und dem Bauplan-Koordinatensystem, festzulegen. Alternativ oder zusätzlich ist das Ausrichtmodul 31 eingerichtet, um das Bauplan-Koordinatensystem relativ zu dem wenigstens einen Lagebestimmungsmerkmal 33 auszurichten, wobei in diesem Fall das Bauplan-Koordinatensystem bevorzugt implizit auf das durch das Lagebestimmungsmerkmal definierte Bauebenen-Koordinatensystem ausgerichtet wird.

Bevorzugt ist die erste Sensoreinrichtung 19 als optische Sensoreinrichtung ausgebildet, die eingerichtet ist, um eine optische Abbildung des ersten Erfassungsbereichs 21 aufzunehmen. Bevorzugt weist die erste Sensoreinrichtung 19 eine Kamera 37 auf. Besonders bevorzugt ist die erste Sensoreinrichtung 19 als Pulverbettkamera ausgebildet.

Vorzugsweise ist die zweite Sensoreinrichtung 29 eingerichtet, um die Scannereinrichtung 15 zur Verlagerung des optischen Arbeitsstrahls 9 in dem Arbeitsbereich 13 anzusteuern, um Signalwerte von aus einem Wechselwirkungsbereich 39 des optischen Arbeitsstrahls 9 in dem Arbeitsbereich 13 ausgehender elektromagnetischer Strahlung 40 ortsabhängig zu erfassen, wobei jedem Ort der Verlagerung des optischen Arbeitsstrahls 9 in dem Arbeitsbereich 13 ein Signalwert zugeordnet wird, und um eine Abbildung des Arbeitsbereichs 13 aus den ortsabhängig erfassten Signalwerten zu erhalten.

Bei dem hier dargestellten ersten Ausführungsbeispiel der Messvorrichtung 5 weist die zweite Sensoreinrichtung 29 eine auf einer optischen Achse A des optischen Arbeitsstrahls 9 angeordnete, bevorzugt wenigstens eine Fotodiode aufweisende Detektionseinrichtung 41 auf. Dabei ist die zweite Sensoreinrichtung 29 eingerichtet, um die Signalwerte ortsabhängig zu erfassen, indem ein Ausgangssignal der Detektionseinrichtung 41 zeitabhängig einem synchronen Zustand der Scannereinrichtung 15 zugeordnet wird.

Bei dem in Figur 1 dargestellten ersten Ausführungsbeispiel weist die zweite Sensoreinrichtung 29 einen Umlenkspiegel 42 auf, über den der optische Arbeitsstrahl 9 umgelenkt wird, wobei die Reflektivität des Umlenkspiegels 42 kleiner ist als 100 %, sodass ein Anteil der entlang der optischen Achse A abgestrahlten elektromagnetischen Strahlung 40 durch den Umlenkspiegel 42 hindurchtritt und auf die hinter dem Umlenkspiegel 42 angeordnete Detektionseinrichtung 41 fällt.

Das Auswahlmodul 23 ist bevorzugt eingerichtet, um den wenigstens einen Interessenbereich 25 automatisch auszuwählen. Alternativ oder zusätzlich weist die Messvorrichtung 5, hier insbesondere die Steuereinrichtung 17, eine Nutzer-Schnittstelle 43 auf, über welche eine Auswahl des wenigstens einen Interessenbereichs 25 durch einen Benutzer der Messvorrichtung 5 möglich ist.

Das Ausrichtmodul 31 ist bevorzugt eingerichtet, um zumindest eine Ausrichtung, ausgewählt aus der Winkelausrichtung und der Translationsausrichtung, des Bauplan-Koordinatensystems relativ zu dem Bauebenen-Koordinatensystem automatisch zu bestimmen. Alternativ oder zusätzlich ist die Nutzer-Schnittstelle 43 bevorzugt derart eingerichtet, dass über diese die zumindest eine Ausrichtung durch den Benutzer der Messvorrichtung 5 gewählt werden kann.

Vorzugsweise weist die Messvorrichtung 5 ein Darstellungsmodul 45 auf, das eingerichtet ist, um eine Gesamt-Darstellung des Interessenbereichs 25 in dem ersten Erfassungsbereich 21 zu berechnen, insbesondere durch Überblenden einer ersten Darstellung des ersten Erfassungsbereichs 21 mit einer zweiten Darstellung des Interessenbereichs 25, und/oder durch Verrechnen der ersten Darstellung des ersten Erfassungsbereichs 21 mit der zweiten Darstellung des Interessenbereichs 25 zu der Gesamt-Darstellung.

Bevorzugt ist das Darstellungsmodul 45 eingerichtet, um eine AR-Darstellung des Arbeitsbereichs 13 derart zu berechnen, dass in der AR-Darstellung die Gesamt-Darstellung in dem Arbeitsbereich 13, insbesondere in einer - insbesondere in Echtzeit aufgenommenen - optischen Aufnahme des Arbeitsbereichs 13, dargestellt wird, vorzugsweise durch Überblendung der Gesamt-Darstellung mit dem Arbeitsbereich 13, insbesondere mit der optischen Aufnahme des Arbeitsbereichs 13.

Bevorzugt ist das Darstellungsmodul 45 eingerichtet, um in der Gesamt-Darstellung oder in der AR-Darstellung wenigstens ein Koordinatensystem, ausgewählt aus dem Bauebenen-Koordinatensystem und dem Bauplan Koordinatensystem, darzustellen. Alternativ oder zusätzlich ist das Darstellungsmodul 45 eingerichtet, um in der Gesamt-Darstellung oder in der AR-Darstellung Bestrahlungsvektoren für die generative Fertigung des Bauteils 3 in dem Arbeitsbereich 13 darzustellen.

Die Fertigungsvorrichtung 1 weist bevorzugt eine Ausgabevorrichtung 47 auf, die mit der Messvorrichtung 5, insbesondere mit dem Darstellungsmodul 45, hier insbesondere mit der Steuereinrichtung 17, wirkverbunden und eingerichtet ist, um zumindest eine durch das Darstellungsmodul 45 berechnete Darstellung, ausgewählt aus der Gesamt-Darstellung und der AR-Darstellung, auszugeben.

Bevorzugt ist das Ausrichtmodul 31 eingerichtet, um Lageinformationen entlang einer sich senkrecht zu der Bauebene 11 erstreckenden Koordinate mit wenigstens einem Koordinatensystem zu verknüpfen, das ausgewählt ist aus dem Bauebenen-Koordinatensystem und dem Bauplan-Koordinatensystem.

Vorzugsweise ist das Ausrichtmodul 31 eingerichtet, um eine Mehrzahl von optischen Arbeitsstrahlen 9 der Fertigungsvorrichtung 1 relativ zu mindestens einem Koordinatensystem auszurichten, das ausgewählt ist aus dem Bauebenen-Koordinatensystem und dem Bauplan-Koordinatensystem.

Fig. 2 zeigt eine schematische Darstellung eines zweiten Ausführungsbeispiels der Fertigungsvorrichtung 1 zum generativen Fertigen eines Bauteils 3 aus einem Pulvermaterial 4 mit einem zweiten Ausführungsbeispiel der Messvorrichtung 5.

Gleiche und funktionsgleiche Elemente sind in allen Figuren mit gleichen Bezugszeichen versehen, sodass insofern jeweils auf die vorangegangene Beschreibung verwiesen wird.

Bei dem zweiten Ausführungsbeispiel der Messvorrichtung 5 weist die zweite Sensoreinrichtung 29 eine Wärmebildkamera 49 auf, die angeordnet und eingerichtet ist, um den Arbeitsbereich 13 zu erfassen, wobei die zweite Sensoreinrichtung 29 eingerichtet ist, um die Signalwerte durch Aufnahme eines Wärmebilds mit der Wärmebildkamera 49 ortsabhängig zu erfassen.

Im Rahmen einer bevorzugten Ausführungsform eines Verfahrens zum Betreiben der Fertigungsvorrichtung 1 wird erster Erfassungsbereich 21 mit einer ersten Messgenauigkeit erfasst. Der wenigstens eine Interessenbereich 25 wird innerhalb des ersten Erfassungsbereichs 21 ausgewählt, und der wenigstens eine ausgewählte Interessenbereich 25 wird mit einer zweiten Messgenauigkeit erfasst, wobei die zweite Messgenauigkeit höher ist als die erste Messgenauigkeit. Wenigstens eine Ausrichtung des Bauplan-Koordinatensystems relativ zu dem Bauebenen-Koordinatensystem, ausgewählt aus der Winkelausrichtung und der Translationsausrichtung, wird anhand des erfassten Interessenbereichs 25 bestimmt.

Vorzugsweise wird die Winkelausrichtung anhand wenigstens eines erfassten Bereichs, ausgewählt aus dem erfassten ersten Erfassungsbereich 21 und dem erfassten Interessenbereich 25, bestimmt, während die Translationsausrichtung anhand des erfassten Interessenbereichs 25 bestimmt wird.

Vorzugsweise wird eine geometrische Lage des wenigstens einen Vorformlings 35 in der Bauebene 11 relativ zu wenigstens einem Koordinatensystem, ausgewählt aus dem Bauebenen-Koordinatensystem und dem Bauplan-Koordinatensystem, ermittelt, und das Bauteil 3 wird auf dem Vorformling 35 generativ aufgebaut.

## Patentansprüche

1. Messvorrichtung (5) zum Ausrichten eines Bauplan-Koordinatensystems auf ein Bauebenen-Koordinatensystem eines in einer Bauebene (11) angeordneten Arbeitsbereichs (13) einer generativen Fertigungsvorrichtung (1), mit
- einer ersten Sensoreinrichtung (19), die eingerichtet ist, um einen ersten Erfassungsbereich (21) des Arbeitsbereichs (13) mit einer ersten Messgenauigkeit zu erfassen,
- einem Auswahlmodul (23), das eingerichtet ist, um wenigstens einen Interessenbereich (25) innerhalb des ersten Erfassungsbereichs (21) auszuwählen,
- einer zweiten Sensoreinrichtung (29), die eingerichtet ist, um den wenigstens einen ausgewählten Interessenbereich (25) mit einer zweiten Messgenauigkeit zu erfassen, wobei die zweite Messgenauigkeit höher ist als die erste Messgenauigkeit, und mit
- einem Ausrichtmodul (31), das eingerichtet ist, um wenigstens eine Ausrichtung des Bauplan-Koordinatensystems relativ zu dem Bauebenen-Koordinatensystem, ausgewählt aus einer Winkelausrichtung und einer Translationsausrichtung, anhand des erfassten Interessenbereichs (25) zu bestimmen.

2. Messvorrichtung (5) nach Anspruch 1, wobei das Ausrichtmodul (31) eingerichtet ist, um die Winkelausrichtung des Bauplan-Koordinatensystems relativ zu dem Bauebenen-Koordinatensystem anhand wenigstens eines erfassten Bereichs, ausgewählt aus dem erfassten ersten Erfassungsbereich (21) und dem erfassten Interessenbereich (25), zu bestimmen, und um die Translationsausrichtung des Bauplan-Koordinatensystems relativ zu dem Bauebenen-Koordinatensystem anhand des erfassten Interessenbereichs (25) zu bestimmen.

3. Messvorrichtung (5) nach einem der vorhergehenden Ansprüche, wobei das Ausrichtmodul (31) eingerichtet ist, um wenigstens ein Lagebestimmungsmerkmal (33) von wenigstens einem in dem Arbeitsbereich (13) angeordneten Vorformling (35) zu erkennen, und um
- eine geometrische Lage des wenigstens einen Lagebestimmungsmerkmals (33) relativ zu wenigstens einem Koordinatensystem, ausgewählt aus dem Bauebenen-Koordinatensystem und dem Bauplan-Koordinatensystem, festzulegen, und/oder
- das Bauplan-Koordinatensystem relativ zu dem wenigstens einen Lagebestimmungsmerkmal (33) auszurichten.

4. Messvorrichtung (5) nach einem der vorhergehenden Ansprüche, wobei die erste Sensoreinrichtung (19) als optische Sensoreinrichtung ausgebildet ist, die eingerichtet ist, um eine optische Abbildung des ersten Erfassungsbereichs (21) aufzunehmen, wobei die erste Sensoreinrichtung (19) vorzugsweise mindestens eine Kamera (37) aufweist.

5. Messvorrichtung (5) nach einem der vorhergehenden Ansprüche, wobei die zweite Sensoreinrichtung (29) eingerichtet ist, um
- eine Scannereinrichtung (15) zur Verlagerung eines optischen Arbeitsstrahls (9) der generativen Fertigungsvorrichtung (1) in dem Arbeitsbereich (13) anzusteuern,
- Signalwerte von aus einem Wechselwirkungsbereich (39) des optischen Arbeitsstrahls (9) in dem Arbeitsbereich (13) ausgehender elektromagnetischer Strahlung (40) ortsabhängig zu erfassen, wobei jedem Ort der Verlagerung des optischen Arbeitsstrahls (9) in dem Arbeitsbereich (13) ein Signalwert zugeordnet wird, und um
- eine Abbildung des Arbeitsbereichs (13) aus den ortsabhängig erfassten Signalwerten zu erhalten.

6. Messvorrichtung (5) nach Anspruch 5, wobei die zweite Sensoreinrichtung (29)
- eine auf einer optischen Achse (A) des optischen Arbeitsstrahls (9) angeordnete Detektionseinrichtung (41) aufweist und eingerichtet ist, um den Signalwert ortsabhängig zu erfassen, indem ein Ausgangssignal der Detektionseinrichtung (41) zeitabhängig einem synchronen Zustand der Scannereinrichtung (15) zugeordnet wird, und/oder
- eine Wärmebildkamera (49) aufweist, die angeordnet und eingerichtet ist, um den Arbeitsbereich (13) zu erfassen, wobei die zweite Sensoreinrichtung (29) eingerichtet ist, um den Signalwert durch Aufnahme eines Wärmebilds mit der Wärmebildkamera (49) ortsabhängig zu erfassen.

7. Messvorrichtung (5) nach einem der vorhergehenden Ansprüche, wobei das Auswahlmodul (23) eingerichtet ist, um
- den wenigstens einen Interessenbereich (25) automatisch auszuwählen, und/oder
- eine Nutzer-Schnittstelle (43) bereitzustellen, die eine Auswahl des wenigstens einen Interessenbereichs (25) durch einen Benutzer der Messvorrichtung (5) ermöglicht.

8. Messvorrichtung (5) nach einem der vorhergehenden Ansprüche, wobei das Ausrichtmodul (31) eingerichtet ist, um
- zumindest eine Ausrichtung, ausgewählt aus der Winkelausrichtung und der Translationsausrichtung, des Bauplan-Koordinatensystems relativ zu dem Bauebenen-Koordinatensystem automatisch zu bestimmen, und/oder
- eine Nutzer-Schnittstelle (43) bereitzustellen, die zumindest eine Ausrichtung, ausgewählt aus der Winkelausrichtung und der Translationsausrichtung, des Bauplan-Koordinatensystems relativ zu dem Bauebenen-Koordinatensystem durch einen Benutzer der Messvorrichtung (5) ermöglicht.

9. Messvorrichtung (5) nach einem der vorhergehenden Ansprüche, wobei die Messvorrichtung (5) ein Darstellungsmodul (45) aufweist, das eingerichtet ist, um eine Gesamt-Darstellung des Interessenbereichs (25) in dem ersten Erfassungsbereich (21) zu berechnen, insbesondere durch
- Überblenden einer ersten Darstellung des ersten Erfassungsbereichs (21) mit einer zweiten Darstellung des Interessenbereichs (25) und/oder
- Verrechnen der ersten Darstellung des ersten Erfassungsbereichs (21) mit der zweiten Darstellung des Interessenbereichs (25) zu der Gesamt-Darstellung.

10. Messvorrichtung (5) nach Anspruch 9, wobei das Darstellungsmodul (45) eingerichtet ist, um eine AR-Darstellung des Arbeitsbereichs (13) derart zu berechnen, dass in der AR-Darstellung die Gesamt-Darstellung in dem Arbeitsbereich (13) dargestellt wird, vorzugsweise durch Überblendung der Gesamt-Darstellung mit dem Arbeitsbereich (13).

11. Messvorrichtung (5) nach einem der Ansprüche 9 oder 10, wobei das Darstellungsmodul (45) eingerichtet ist, um in der Gesamt-Darstellung oder in der AR-Darstellung
- wenigstens ein Koordinatensystem, ausgewählt aus dem Bauebenen-Koordinatensystem und dem Bauplan-Koordinatensystem, und/oder
- Bestrahlungsvektoren für die generative Fertigung eines Bauteils (3) in dem Arbeitsbereich (13)
darzustellen.

12. Messvorrichtung (5) nach einem der vorhergehenden Ansprüche, wobei das Ausrichtmodul (31) eingerichtet ist, um Lageinformationen entlang einer sich senkrecht zu der Bauebene (11) erstreckenden Koordinate mit wenigstens einem Koordinatensystem, ausgewählt aus dem Bauebenen-Koordinatensystem und dem Bauplan-Koordinatensystem, zu verknüpfen.

13. Messvorrichtung (5) nach einem der vorhergehenden Ansprüche, wobei das Ausrichtmodul (31) eingerichtet ist, um eine Mehrzahl von optischen Arbeitsstrahlen (9) der Fertigungsvorrichtung (1) relativ zu mindestens einem Koordinatensystem, ausgewählt aus dem Bauebenen-Koordinatensystem und dem Bauplan-Koordinatensystem, auszurichten.

14. Fertigungsvorrichtung (1) zum generativen Fertigen eines Bauteils (3) aus einem Pulvermaterial (4), mit
- einer Strahleinrichtung (7), die eingerichtet ist zum Erzeugen von wenigstens einem optischen Arbeitsstrahl (9), um ein Bauteil (3) mittels des wenigstens einen optischen Arbeitsstrahls (9) generativ aus einem Pulvermaterial (4) zu fertigen,
- einem in einer Bauebene (11) angeordneten Arbeitsbereich (13), der eingerichtet ist zum generativen Fertigen eines Bauteils (3) aus dem Pulvermaterial (4) in dem Arbeitsbereich (13),
- wenigstens einer Scannereinrichtung (15), die eingerichtet ist zum Verlagern des wenigstens einen optischen Arbeitsstrahls in dem Arbeitsbereich (13), mit
- einer Steuereinrichtung (17), die mit der wenigstens einen Scannereinrichtung (15) wirkverbunden und eingerichtet ist, um die wenigstens eine Scannereinrichtung (15) zum Verlagern des wenigstens einen optischen Arbeitsstrahls (9) in dem Arbeitsbereich (13) anzusteuern, und mit
- einer Messvorrichtung (5) nach einem der Ansprüche 1 bis 13.

15. Fertigungsvorrichtung (1) nach Anspruch 14, wobei die Fertigungsvorrichtung (1) eine Ausgabevorrichtung (47) aufweist, die mit der Messvorrichtung (5), insbesondere mit dem Darstellungsmodul (45), wirkverbunden und eingerichtet ist, um zumindest eine durch das Darstellungsmodul (45) berechnete Darstellung, ausgewählt aus der Gesamt-Darstellung und der AR-Darstellung, auszugeben.

## Claims

1. A measuring device (5) for aligning a construction plan coordinate system with a construction plane coordinate system of a working area (13) of a generative manufacturing device (1) arranged in a construction plane (11), with
- a first sensor device (19) that is configured to detect a first detection area (21) of the working area (13) with a first measuring accuracy,
- a selection module (23) configured to select at least one area of interest (25) within the first detection area (21),
- a second sensor device (29) that is configured to detect the at least one selected area of interest (25) with a second measuring accuracy, wherein the second measuring accuracy is higher than the first measuring accuracy, and with
- an alignment module (31) configured to determine at least one alignment of the construction plan coordinate system relative to the construction plane coordinate system, selected from an angular alignment and a translational alignment, based on the detected area of interest (25).

2. The measuring device (5) according to claim 1, wherein the alignment module (31) is configured to determine the angular alignment of the construction plan coordinate system relative to the construction plane coordinate system based on at least one detected area selected from the detected first detection area (21) and the detected area of interest (25), and to determine the translational alignment of the construction plan coordinate system relative to the construction plane coordinate system based on the detected area of interest (25).

3. The measuring device (5) according to one of the preceding claims, wherein the alignment module (31) is configured to detect at least one orientation feature (33) of at least one preform (35) arranged in the working area (13), and to
- determine a geometric position of the at least one orientation feature (33) relative to at least one coordinate system selected from the construction plane coordinate system and the construction plan coordinate system, and/or
- to align the construction plan coordinate system relative to the at least one orientation feature (33).

4. The measuring device (5) according to one of the preceding claims, wherein the first sensor device (19) is designed as an optical sensor device that is configured to record an optical image of the first detection area (21), wherein the first sensor device (19) preferably has at least one camera (37).

5. The measuring device (5) according to one of the preceding claims, wherein the second sensor device (29) is configured to
- control a scanner device (15) for shifting an optical working beam (9) of the generative manufacturing device (1) in the working area (13),
- detect signal values of electromagnetic radiation (40) emanating from an interaction area (39) of the optical working beam (9) in the working area (13) depending on location, wherein a signal value is assigned to each location of the displacement of the optical working beam (9) in the working area (13), and to
- to obtain an image of the working area (13) from the signal values recorded at specific locations.

6. The measuring device (5) according to claim 5, wherein the second sensor device (29)
- has a detection device (41) arranged on an optical axis (A) of the optical working beam (9) and is configured to record the signal value depending on the location by assigning an output signal of the detection device (41) to a synchronous state of the scanner device (15) depending on time, and/or
- has a thermal imaging camera (49) that is arranged and configured to detect the working area (13), wherein the second sensor device (29) is configured to detect the signal value depending on the location by capturing a thermal image with the thermal imaging camera (49).

7. The measuring device (5) according to one of the preceding claims, wherein the selection module (23) is configured to
- automatically select at least one area of interest (25), and/or
- provide a user interface (43) that enables a user of the measuring device (5) to select at least one area of interest (25).

8. The measuring device (5) according to one of the preceding claims, wherein the alignment module (31) is configured to
- automatically determine at least one alignment, selected from the angular alignment and the translational alignment, of the construction plan coordinate system relative to the construction plane coordinate system, and/or
- provide a user interface (43) that enables at least one alignment, selected from the angular alignment and the translational alignment, of the construction plan coordinate system relative to the construction plane coordinate system by a user of the measuring device (5).

9. The measuring device (5) according to one of the preceding claims, wherein the measuring device (5) comprises a representation module (45) that is configured to calculate an overall representation of the area of interest (25) in the first detection area (21), in particular by
- superimposing a first representation of the first detection area (21) with a second representation of the area of interest (25) and/or
- offsetting the first representation of the first detection area (21) against the second representation of the area of interest (25) to produce the overall representation.

10. The measuring device (5) according to claim 9, wherein the representation module (45) is configured to calculate an AR representation of the working area (13) in such a way that the overall representation is displayed in the working area (13) in the AR representation, preferably by superimposing the overall representation onto the working area (13).

11. The measuring device (5) according to any one of claims 9 or 10, wherein the representation module (45) is configured to display in the overall presentation or in the AR presentation
- at least one coordinate system selected from the construction plane coordinate system and the construction plan coordinate system, and/or
- irradiation vectors for the generative manufacturing of a component (3) in the working area (13).

12. The measuring device (5) according to one of the preceding claims, wherein the alignment module (31) is configured to link position information along a coordinate extending perpendicular to the construction plane (11) with at least one coordinate system selected from the construction plane coordinate system and the construction plan coordinate system.

13. The measuring device (5) according to one of the preceding claims, wherein the alignment module (31) is configured to align a plurality of optical working beams (9) of the manufacturing device (1) relative to at least one coordinate system selected from the construction plane coordinate system and the construction plan coordinate system.

14. A manufacturing device (1) for the generative manufacturing of a component (3) from a powder material (4), with
- a beam device (7) that is configured to generate at least one optical working beam (9) in order to generatively manufacture a component (3) from a powder material (4) using the at least one optical working beam (9),
- a working area (13) arranged in a construction plane (11), which is configured for the generative manufacturing of a component (3) from the powder material (4) in the working area (13),
- at least one scanner device (15) that is configured to move the at least one optical working beam in the working area (13), with
- a control device (17) which is operatively connected to the at least one scanner device (15) and is configured to control the at least one scanner device (15) to move the at least one optical working beam (9) in the working area (13), and with
- a measuring device (5) according to any one of claims 1 to 13.

15. The manufacturing device (1) according to claim 14, wherein the manufacturing device (1) has an output device (47) that is operatively connected to the measuring device (5), in particular with the representation module (45), and is configured to output at least one representation calculated by the representation module (45), selected from the overall representation and the AR representation.

## Revendications

1. Dispositif de mesure (5) destiné à aligner un système de coordonnées de plan de construction sur un système de coordonnées de plan de fabrication d'une zone de travail (13) disposée dans un plan de fabrication (11) d'un dispositif de fabrication (1) générative, comprenant
- un premier dispositif de capteur (19), configuré pour détecter une première zone de détection (21) de la zone de travail (13) avec une première précision de mesure,
- un module de sélection (23), configuré pour sélectionner au moins une zone d'intérêt (25) à l'intérieur de la première zone de détection (21),
- un deuxième dispositif de capteur (29), configuré pour détecter ladite au moins une zone d'intérêt (25) sélectionnée avec une deuxième précision de mesure, dans lequel la deuxième précision de mesure est supérieure à la première précision de mesure, et comprenant
- un module d'alignement (31), configuré pour déterminer au moins un alignement du système de coordonnées de plan de construction par rapport au système de coordonnées de plan de fabrication, sélectionné parmi un alignement angulaire et un alignement en translation, sur la base de la zone d'intérêt (25) détectée.

2. Dispositif de mesure (5) selon la revendication 1, dans lequel le module d'alignement (31) est configuré pour déterminer l'alignement angulaire du système de coordonnées de plan de construction par rapport au système de coordonnées de plan de fabrication sur la base d'au moins une zone détectée, sélectionnée parmi la première zone de détection (21) détectée et la zone d'intérêt (25) détectée, et pour déterminer l'alignement en translation du système de coordonnées de plan de construction par rapport au système de coordonnées de plan de fabrication sur la base de la zone d'intérêt (25) détectée.

3. Dispositif de mesure (5) selon l'une quelconque des revendications précédentes, dans lequel le module d'alignement (31) est configuré pour reconnaître au moins une caractéristique de détermination de position (33) d'au moins une ébauche (35) disposée dans la zone de travail (13), et pour
- définir une position géométrique de ladite au moins une caractéristique de détermination de position (33) par rapport à au moins un système de coordonnées, sélectionné parmi le système de coordonnées de plan de fabrication et le système de coordonnées de plan de construction, et/ou
- aligner le système de coordonnées de plan de construction par rapport à ladite au moins une caractéristique de détermination de position (33).

4. Dispositif de mesure (5) selon l'une quelconque des revendications précédentes, dans lequel le premier dispositif de capteur (19) est conçu en tant que dispositif de capteur optique, configuré pour acquérir une image optique de la première zone de détection (21), dans lequel le premier dispositif de capteur (19) comporte de préférence au moins une caméra (37).

5. Dispositif de mesure (5) selon l'une quelconque des revendications précédentes, dans lequel le deuxième dispositif de capteur (29) est configuré pour
- piloter un dispositif de scanner (15) pour le déplacement d'un faisceau de travail (9) optique du dispositif de fabrication (1) générative dans la zone de travail (13),
- détecter, en fonction de la position, des valeurs de signal de rayonnement électromagnétique (40) émis à partir d'une zone d'interaction (39) du faisceau de travail (9) optique dans la zone de travail (13), dans lequel une valeur de signal est associée à chaque position du déplacement du faisceau de travail (9) optique dans la zone de travail (13), et pour
- obtenir une image de la zone de travail (13) à partir des valeurs de signal détectées en fonction de la position.

6. Dispositif de mesure (5) selon la revendication 5, dans lequel le deuxième dispositif de capteur (29)
- comporte un dispositif de détection (41) disposé sur un axe optique (A) du faisceau de travail (9) optique et est configuré pour détecter la valeur de signal en fonction de la position en associant temporellement un signal de sortie du dispositif de détection (41) à un état synchrone du dispositif de scanner (15), et/ou
- comporte une caméra (49) thermique, qui est disposée et configurée pour détecter la zone de travail (13), dans lequel le deuxième dispositif de capteur (29) est configuré pour détecter la valeur de signal en fonction de la position par acquisition d'une image thermique avec la caméra (49) thermique.

7. Dispositif de mesure (5) selon l'une quelconque des revendications précédentes, dans lequel le module de sélection (23) est configuré pour
- sélectionner automatiquement ladite au moins une zone d'intérêt (25), et/ou
- mettre à disposition une interface utilisateur (43) permettant une sélection de ladite au moins une zone d'intérêt (25) par un utilisateur du dispositif de mesure (5).

8. Dispositif de mesure (5) selon l'une quelconque des revendications précédentes, dans lequel le module d'alignement (31) est configuré pour
- déterminer automatiquement au moins un alignement, sélectionné parmi l'alignement angulaire et l'alignement en translation, du système de coordonnées de plan de construction par rapport au système de coordonnées de plan de fabrication, et/ou
- mettre à disposition une interface utilisateur (43) permettant à un utilisateur du dispositif de mesure (5) d'effectuer au moins un alignement, sélectionné parmi l'alignement angulaire et l'alignement en translation, du système de coordonnées de plan de construction par rapport au système de coordonnées de plan de fabrication.

9. Dispositif de mesure (5) selon l'une quelconque des revendications précédentes, dans lequel le dispositif de mesure (5) comporte un module d'affichage (45), configuré pour calculer une représentation globale de la zone d'intérêt (25) dans la première zone de détection (21), en particulier par
- superposition d'une première représentation de la première zone de détection (21) avec une deuxième représentation de la zone d'intérêt (25) et/ou
- combinaison de la première représentation de la première zone de détection (21) avec la deuxième représentation de la zone d'intérêt (25) pour former la représentation globale.

10. Dispositif de mesure (5) selon la revendication 9, dans lequel le module d'affichage (45) est configuré pour calculer une représentation AR de la zone de travail (13) de telle sorte que, dans la représentation AR, la représentation globale soit affichée dans la zone de travail (13), de préférence par superposition de la représentation globale avec la zone de travail (13).

11. Dispositif de mesure (5) selon l'une quelconque des revendications 9 ou 10, dans lequel le module d'affichage (45) est configuré pour afficher, dans la représentation globale ou dans la représentation AR
- au moins un système de coordonnées, sélectionné parmi le système de coordonnées de plan de fabrication et le système de coordonnées de plan de construction, et/ou
- des vecteurs d'irradiation pour la fabrication générative d'une pièce (3) dans la zone de travail (13).

12. Dispositif de mesure (5) selon l'une quelconque des revendications précédentes, dans lequel le module d'alignement (31) est configuré pour relier des informations de position le long d'une coordonnée s'étendant perpendiculairement au plan de fabrication (11) avec au moins un système de coordonnées, sélectionné parmi le système de coordonnées de plan de fabrication et le système de coordonnées de plan de construction.

13. Dispositif de mesure (5) selon l'une quelconque des revendications précédentes, dans lequel le module d'alignement (31) est configuré pour aligner une pluralité de faisceaux de travail (9) optiques du dispositif de fabrication (1) par rapport à au moins un système de coordonnées, sélectionné parmi le système de coordonnées de plan de fabrication et le système de coordonnées de plan de construction.

14. Dispositif de fabrication (1) destiné à la fabrication générative d'une pièce (3) à partir d'un matériau pulvérulent (4), comprenant
- un dispositif d'émission de faisceau (7), configuré pour générer au moins un faisceau de travail (9) optique afin de fabriquer de manière générative une pièce (3) à partir d'un matériau pulvérulent (4) au moyen dudit au moins un faisceau de travail (9) optique,
- une zone de travail (13) disposée dans un plan de fabrication (11), configurée pour la fabrication générative d'une pièce (3) à partir du matériau pulvérulent (4) dans la zone de travail (13),
- au moins un dispositif de scanner (15), configuré pour le déplacement dudit au moins un faisceau de travail optique dans la zone de travail (13), comprenant
- un dispositif de commande (17), qui est en liaison fonctionnelle avec ledit au moins un dispositif de scanner (15) et est configuré pour piloter ledit au moins un dispositif de scanner (15) pour le déplacement dudit au moins un faisceau de travail (9) optique dans la zone de travail (13), et comprenant
- un dispositif de mesure (5) selon l'une quelconque des revendications 1 à 13.

15. Dispositif de fabrication (1) selon la revendication 14, dans lequel le dispositif de fabrication (1) comporte un dispositif de sortie (47), qui est en liaison fonctionnelle avec le dispositif de mesure (5), en particulier avec le module d'affichage (45), et est configuré pour restituer au moins une représentation calculée par le module d'affichage (45), sélectionnée parmi la représentation globale et la représentation AR.
